(19) Europäisches Patentamt
European Patent Office
Office européen des brevets

(11) EP 3 955 167 A1

## (12) DEMANDE DE BREVET EUROPEEN

(43) Date de publication:
**16.02.2022 Bulletin 2022/07**

(21) Numéro de dépôt: **21188511.6**

(22) Date de dépôt: **29.07.2021**

(51) Classification Internationale des Brevets (IPC):
**G06N 3/04** $^{(2006.01)}$     **G06N 3/063** $^{(2006.01)}$
**G06N 3/08** $^{(2006.01)}$

(52) Classification Coopérative des Brevets (CPC):
**G06N 3/0454; G06N 3/063; G06N 3/084**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.08.2020 FR 2008236**

(71) Demandeur: **Commissariat à l'Energie Atomique et aux Energies Alternatives**
**75015 Paris (FR)**

(72) Inventeur: **HARRAND, Michel**
**38054 GRENOBLE Cedex 09 (FR)**

(74) Mandataire: **Marks & Clerk France**
**Immeuble "Visium"**
**22, avenue Aristide Briand**
**94117 Arcueil Cedex (FR)**

(54) **ARCHITECTURE DE CALCUL RECONFIGURABLE POUR LA MISE EN OEUVRE DE RÉSEAUX DE NEURONES ARTIFICIELS**

(57)     Un calculateur pour calculer une couche ($C_k$, $C_{k+1}$) d'un réseau de neurones artificiels. Le calculateur est configurable selon deux configurations distinctes et comprend: une ligne de transmission ; un ensemble d'unités de calcul ; un ensemble de mémoires de poids chacune associée à une unité de calcul, chaque mémoire de poids contenant un sous ensemble de coefficients synaptiques nécessaire et suffisant à l'unité de calcul associée pour réaliser les calculs nécessaires pour l'une quelconque des deux configurations et des moyens de contrôle pour configurer les unités de calcul du calculateur selon l'une quelconque des deux configurations. Dans la première configuration les unités de calcul sont configurées de manière à ce que le calcul d'une somme pondérée soit réalisé intégralement par une même unité de calcul. Dans la seconde configuration les unités de calcul sont configurées de manière à ce que le calcul d'une somme pondérée soit réalisé par une chaine de plusieurs unités de calcul agencées en série.

FIG.4

EP 3 955 167 A1

## Description

### Champ d'application

L'invention concerne généralement les réseaux neuro-morphiques numériques et plus particulièrement une architecture de calculateur reconfigurable pour le calcul de réseaux de neurones artificiels à base de couches convolutionnelles ou entièrement connectées.

### Problème soulevé

Les réseaux de neurones artificiels constituent des modèles de calculs imitant le fonctionnement des réseaux de neurones biologiques. Les réseaux de neurones artificiels comprennent des neurones interconnectés entre eux par des synapses, chaque synapse est attachée à un poids implémentés par exemple par des mémoires numériques. Les réseaux de neurones artificiels sont utilisés dans différents domaines de traitement du signal (visuel, sonore, ou autre) comme par exemple dans le domaine de la classification d'image ou de la reconnaissance d'image.

Les réseaux de neurones convolutionnels correspondent à un modèle particulier de réseau de neurones artificiels. Les réseaux de neurones convolutionnels ont été décrits initialement dans l'article de K. Fukushima, « Neocognitron: A self-organizing neural network model for a mechanism of pattern récognition unaffected by shift in position. Biological Cybernetics, 36(4): 193-202, 1980. ISSN 0340-1200. doi: 10.1007/BF00344251 ».

Les réseaux de neurones convolutionnels (désignés en langue anglo-saxonne par les expressions "convolutional neural networks", ou "deep (convolutional) neural networks" ou encore "ConvNets") sont des réseaux de neurones inspirés par les systèmes visuels biologiques.

Les réseaux de neurones convolutionnels (CNN) sont utilisés notamment dans des systèmes de classifications d'images pour améliorer la classification. Appliqués à la reconnaissance d'images, ces réseaux permettent un apprentissage des représentations intermédiaires d'objets dans les images. Les représentations intermédiaires représentant des caractéristiques élémentaires (de formes ou de contour par exemple) sont plus petites et généralisables pour des objets similaires, ce qui facilite leur reconnaissance. Cependant, le fonctionnement intrinsèquement parallèle et la complexité des classificateurs de type réseau de neurones convolutionnels rend difficile leur implémentation dans des systèmes embarqués à ressources limitées. En effet, les systèmes embarqués imposent de fortes contraintes par rapport à la surface du circuit et à la consommation électrique.

Le réseau de neurones convolutionnels est basé sur une succession de couches de neurones, qui peuvent être des couches convolutionnelles (Convolutional Layer en anglais), entièrement connectées (Fully Connected Layer en Anglais) ou réalisant d'autres opérations de traitements des données d'une image. Dans le cas de couches entièrement connectées, une synapse connecte chaque neurone d'une couche à un neurone de la couche précédente. Dans le cas de couches convolutionnelles, seulement un sous-ensemble des neurones d'une couche est connecté à un sous-ensemble des neurones d'une autre couche. Par ailleurs, les réseaux de neurones convolutionnels peuvent traiter plusieurs canaux d'entrée pour générer plusieurs canaux de sortie. Chaque canal d'entrée correspond, par exemple à une matrice de données différente.

Sur les canaux d'entrée se présentent des images d'entrée sous forme matricielle formant ainsi une matrice d'entrée ; une image matricielle de sortie est obtenue sur les canaux de sortie.

Les matrices de coefficients synaptiques pour une couche convolutionelle sont aussi appelées « noyaux de convolution ».

En particulier, les réseaux de neurones convolutionnels comprennent une ou plusieurs couche(s) de convolution qui sont particulièrement coûteuses en nombres d'opération. Les opérations effectuées sont principalement des opérations de multiplication et accumulation (MAC). Par ailleurs, pour respecter les contraintes de latence et temps de traitement propres aux applications visées, il est nécessaire de paralléliser au maximum les calculs.

Plus particulièrement, lorsque les réseaux de neurones convolutionnels sont embarqués dans un système mobile pour la téléphonie par exemple (par opposition à une implémentation dans des infrastructures de centres de calcul) la réduction de consommation électrique devient un critère primordial pour la réalisation du réseau de neurones. Dans ce type d'implémentation, les solutions de l'état de l'art présentent des mémoires externes aux unités de calcul. Cela augmente le nombre d'opérations de lecture et d'écriture entre des puces électroniques distinctes du système. Ces opérations d'échange de données entre différentes puces sont très énergivores pour un système dédié à une application mobile (téléphonie, véhicule autonome, robotique..).

Il existe donc un besoin pour des calculateurs aptes à mettre en œuvre une couche de convolution d'un réseau de neurones avec une complexité limitée permettant de satisfaire aux contraintes des systèmes embarqués et des applications visées. Plus particulièrement, il existe un besoin pour adapter les architectures de calculateurs de réseaux de neurones pour intégrer des blocs mémoires dans la même puce contenant les unités de calculs (MAC). Cette solution limite les distances parcourues par les données de calcul et permet ainsi de diminuer la consommation de la globalité du réseau de neurones en limitant le nombre d'opérations de lecture et d'écriture sur lesdites mémoires.

Un réseau de neurones peut réaliser une propagation des données de la couche d'entrée vers la couche de sortie mais aussi réaliser une rétro-propagation des signaux d'erreur calculés pendant un cycle d'apprentissage de la couche de sortie vers la couche d'entrée. Si les poids sont rangés dans une matrice de poids pour réaliser une inférence (propagation), l'ordre des poids dans cette matrice n'est pas adapté aux calculs réalisé pour une phase de rétro propagation.

Plus particulièrement, dans les circuits de calcul des réseaux de neurones selon l'état de l'art, les coefficients synaptiques (ou poids) sont stockés dans une mémoire externe. Pendant l'exécution d'une étape de calcul, des mémoires tampon reçoivent un certain nombre des coefficients synaptiques d'une façon temporaire. Ces mémoires tampon sont alors rechargées à chaque étape de calcul avec les poids à utiliser pendant une phase de calcul (inférence ou rétro propagation) et dans l'ordre spécifique à la réalisation de cette phase de calcul. Ces échanges de données récurrents, augmentent considérablement la consommation du circuit. De plus, multiplier le nombre de mémoires par deux (chacune adaptée pour une phase de calcul) n'est pas envisageable car cela augmente considérablement la surface du circuit. L'idée est d'utiliser des mémoires internes contenant les poids dans un certain ordre tout en adaptant le circuit calculateur selon deux configurations chacune adaptée à la réalisation d'une phase de calcul (propagation ou rétro-propagation).

**Réponse au problème et apport solution**

L'invention propose une architecture de calculateur permettant de réduire la consommation électrique d'un réseau de neurones implémenté sur une puce, et de limiter le nombre d'accès en lecture et en écriture entre les unités de calcul du calculateur et les mémoires externes. L'invention propose une architecture de calculateur accélérateur de réseau de neurones artificiels tel que l'ensemble des mémoires contenant les coefficients synaptiques soient implémentées sur la puce contenant les unités de calcul des couches de neurones du réseau. L'architecture selon l'invention présente une flexibilité de configuration implémentée via un agencement de multiplexeurs pour configurer le calculateur selon deux configurations distinctes. L'association de cette flexibilité de configuration et d'une distribution adéquate des coefficients synaptiques dans les mémoires internes des poids permet d'exécuter les nombreuses opérations de calcul pendant une phase d'inférence ou une phase d'apprentissage. Ainsi, l'architecture proposée par l'invention minimise les échanges de données entre les unités de calculs et les mémoires externes ou situées à une distance relativement lointaine dans le système sur puce. Cela induit une amélioration de la performance énergétique du calculateur de réseaux de neurones embarqué dans un système mobile. L'architecture de calculateur accélérateur selon l'invention est compatible avec les technologies émergentes de mémoires de type NVM (Non Volatile Memory en Anglais) nécessitant un nombre limité d'opérations d'écriture. Le calculateur accélérateur selon l'invention est compatible aussi pour exécuter les opérations de mise à jour des poids. Le calculateur accélérateur selon l'invention est compatible avec les calculs d'inférence et de rétro propagation (selon la configuration choisie) pour calculer des couches convolutionelles et des couches entièrement connectées selon la distribution spécifique des coefficients synaptiques ou des noyaux de convolution dans les mémoires de poids.

**Résumé/Revendications**

L'invention a pour objet un calculateur pour calculer une couche d'un réseau de neurones artificiels. Le réseau de neurones est composé d'une succession de couches étant chacune constituée d'un ensemble de neurones. Chaque couche est associée à un ensemble de coefficients synaptiques formant au moins une matrice de poids.

Le calculateur est configurable selon deux configurations distinctes et comprend :

- une ligne de transmission pour distribuer des données d'entrée ;
- un ensemble d'unités de calcul de rangs n=0 à N avec N un entier supérieur ou égal à 1, pour calculer une somme de données d'entrée pondérée par des coefficients synaptiques ;
- un ensemble de mémoires de poids chacune associée à une unité de calcul, chaque mémoire de poids contient un sous ensemble de coefficients synaptiques nécessaire et suffisant à l'unité de calcul associée pour réaliser les calculs nécessaires pour l'une quelconque des deux configurations ;
- des moyens de contrôle pour configurer les unités de calcul du calculateur selon l'une quelconque des deux configurations, dans la première configuration les unités de calcul sont configurées de manière à ce que le calcul d'une somme pondérée soit réalisé intégralement par une même unité de calcul ; dans la seconde configuration les unités de calcul sont configurées de manière à ce que le calcul d'une somme pondérée soit réalisé par une chaine de plusieurs unités de calcul agencées en série.

Selon un aspect particulier de l'invention, la première configuration et la seconde configuration correspondent respectivement à un fonctionnement du calculateur selon l'une quelconque des phases parmi une phase de propagation de données ou une phase de rétro-propagation d'erreurs.

Selon un aspect particulier de l'invention, les données d'entrée sont des données propagées lors de la phase de propagation de données ou des erreurs rétro-propagées lors de la phase de rétro-propagation d'erreurs.

Selon un aspect particulier de l'invention, le nombre d'unités de calcul est inférieur au nombre de neurones dans une couche.

Selon un aspect particulier de l'invention, chaque unité de calcul comprend :

i. un registre d'entrée pour stocker une donnée d'entrée ;
ii. un circuit multiplieur pour calculer le produit d'une donnée d'entrée et d'un coefficient synaptique ;
iii. un circuit additionneur ayant une première entrée connectée à la sortie du circuit multiplieur et étant configuré pour réaliser des opérations de sommation de résultats de calcul partiels d'une somme pondérée ;
iv. au moins un accumulateur pour stocker des résultats de calcul partiels ou finaux de la somme pondérée.

Selon un aspect particulier de l'invention, le calculateur comprend en outre : un organe de distribution de données ayant N+1 sorties, chaque sortie étant connectée au registre d'une unité de calcul de rang n. L'organe de distribution est commandé par les moyens de contrôle pour distribuer simultanément une donnée d'entrée à toutes les unités de calcul lorsque la première configuration est activée.

Selon un aspect particulier de l'invention, le calculateur comprend en outre un étage mémoire fonctionnant selon un principe « premier entré premier sorti » pour propager un résultat partiel de la dernière unité de calcul de rang n=N vers la première unité de calcul de rang n=0, l'étage mémoire étant activé par les moyens de contrôle lorsque la seconde configuration est activée.

Selon un aspect particulier de l'invention, chaque unité de calcul comprend au moins un nombre d'accumulateurs égal au nombre de neurones par couche divisé par le nombre d'unités de calcul arrondi à l'entier supérieur.

Selon un aspect particulier de l'invention, chaque ensemble d'accumulateurs comporte une entrée en écriture sélectionnable parmi les entrées de chaque accumulateur de l'ensemble et une sortie en lecture sélectionnable parmi les sorties de chaque accumulateur de l'ensemble.

Chaque unité de calcul de rang n=1 à N comprend : un multiplexeur ayant une première entrée connectée à la sortie de l'ensemble des accumulateurs de l'unité de calcul de rang n, une seconde entrée connectée à la sortie de l'ensemble des accumulateurs d'une unité de calcul de rang n-1 et une sortie connectée à une seconde entrée du circuit additionneur de l'unité de calcul de rang n.

L'unité de calcul de rang n=0 comprend: un multiplexeur ayant une première entrée connectée à la sortie de l'ensemble des accumulateurs de l'unité de calcul de rang n=0 , une seconde entrée connectée à la sortie de l'ensemble des accumulateurs de l'unité de calcul de rang n=0 et une sortie connectée à une seconde entrée du circuit additionneur de l'unité de calcul de rang n=0.

Les moyens de contrôles sont configurés pour sélectionner la première entrée de chaque multiplexeur lorsque la première configuration est choisie et pour sélectionner la seconde entrée de chaque multiplexeur lorsque la seconde configuration est activée.

Selon un aspect particulier de l'invention, tous les ensembles d'accumulateurs sont interconnectés pour former un étage mémoire pour propager un résultat partiel de la dernière unité de calcul de rang n=N vers la première unité de calcul de rang n=0, l'étage mémoire fonctionnant selon un principe « premier entré premier sorti » lorsque la seconde configuration est activée.

Selon un aspect particulier de l'invention, le calculateur comprend un ensemble de mémoires d'erreurs tel que chacune est associée à une unité de calcul pour stocker un sous ensemble d'erreurs calculées.

Selon un aspect particulier de l'invention, pour chaque unité de calcul, le multiplieur est connecté à la mémoire d'erreurs associée à la même unité de calcul pour calculer le produit d'une donnée d'entrée et d'un signal d'erreur stocké pendant une phase de mise à jour des poids.

Selon un aspect particulier de l'invention, le calculateur comprend un circuit de lecture connecté à chaque mémoire de poids pour commander la lecture des coefficients synaptiques.

Selon un aspect particulier de l'invention, dans le calculateur une couche calculée est entièrement connectée à la couche précédente, et les coefficients synaptiques associés forment une matrice de poids de taille MxM' avec M et M' les nombres respectifs de neurones des deux couches.

Selon un aspect particulier de l'invention, l'organe de distribution est commandé par les moyens de contrôle pour distribuer une donnée d'entrée associée à un neurone de rang i à une unité de calcul de rang n tel que i modulo N+1 égal à n lorsque la seconde configuration est activée.

Selon un aspect particulier de l'invention, lorsque la première configuration est activée, l'intégralité des opérations de multiplication et d'addition pour calculer la somme pondérée associée au neurone de rang i, est réalisée exclusivement par l'unité de calcul de rang n tel que i modulo N+1 égal à n.

Selon un aspect particulier de l'invention, lorsque la seconde configuration est activée, chaque unité de calcul de rang n=1 à N réalise l'opération de multiplication de chaque donnée d'entrée associée au neurone de rang j par un coefficient synaptique tel que j modulo N+1 égal à n , suivie d'une addition avec la sortie de l'unité de calcul de rang n-1 pour obtenir un résultat partiel ou total d'une somme pondérée.

Selon un aspect particulier de l'invention, le sous ensemble de coefficients synaptiques stockés dans la mémoire de poids de rang n correspond aux coefficients synaptiques de toutes les lignes de rangs i de la matrice de poids tel que i modulo N+1 est égal à n lorsque la première configuration est une configuration de calcul pour la phase de propagation de données et la seconde configuration est une configuration de calcul pour la phase de rétro-propagation d'erreurs.

Selon un aspect particulier de l'invention, le sous ensemble de coefficients synaptiques stockés dans la mémoire de poids de rang n correspond aux coefficients synaptiques de toutes les colonnes de rangs j de la matrice de poids tel que j modulo N+1 est égal à n lorsque la première configuration est une configuration de calcul pour la phase de rétro-propagation d'erreurs et la seconde configuration est une configuration de calcul pour la phase de propagation de données.

Selon un aspect particulier de l'invention, le réseau de neurones comprend au moins une couche de neurones convolutionnelle, la couche ayant une pluralité de matrices de sortie de rang q=0 à Q avec Q un entier positif, chaque matrice de sortie étant obtenue à partir d'au moins une matrice d'entrée de rang p=0 à P avec P un entier positif, pour chaque couple de matrice d'entrée de rang p et matrice de sortie de rang q, les coefficients synaptiques associés formant une matrice de poids .

Selon un aspect particulier de l'invention, lorsque la première configuration est activée, l'intégralité des opérations de multiplication et d'addition pour calculer une matrice de sortie de rang q, est réalisée exclusivement par l'unité de calcul de rang n tel que q modulo N+1 égal à n.

Selon un aspect particulier de l'invention, lorsque la seconde configuration est activée, chaque unité de calcul de rang n=1 à N réalise les opérations de calcul des résultats partiels obtenus à partir de chaque matrice d'entrée de rang p tel que p modulo N+1 égal à n, suivies d'une addition avec le résultat partiel de l'unité de calcul de rang n-1.

Selon un aspect particulier de l'invention, le sous ensemble de coefficients synaptiques stockés dans la mémoire de poids de rang n correspond aux coefficients synaptiques appartenant à toutes les matrices de poids associées à la matrice de sortie de rang q tel que q modulo N+1 est égal à n lorsque la première configuration est une configuration de calcul pour la phase de propagation de données et la seconde configuration est une configuration de calcul pour la phase de rétro-propagation d'erreurs.

Selon un aspect particulier de l'invention, le sous ensemble de coefficients synaptiques stockés dans la mémoire de poids de rang n correspond aux coefficients synaptiques appartenant à toutes les matrices de poids associées à la matrice d'entrée de rang p tel que p modulo N+1 est égal à n lorsque la première configuration est une configuration de calcul pour la phase de rétro-propagation d'erreurs et la seconde configuration est une configuration de calcul pour la phase de propagation des données.

## Brève description des dessins

D'autres caractéristiques et avantages de la présente invention apparaîtront mieux à la lecture de la description qui suit en relation aux dessins annexés suivants.

[Fig. 1] représente un exemple de réseau de neurones convolutionnels contenant des couches convolutionnelles et des couches entièrement connectées.

[Fig. 2] illustre sur un exemple d'un couple de couches de neurones entièrement connectées appartenant à un réseau de neurones convolutif, le fonctionnement du réseau pendant une phase d'inférence.

[Fig. 3] illustre sur un exemple d'un couple de couches de neurones entièrement connectées appartenant à un réseau de neurones convolutif, le fonctionnement du réseau pendant une phase de rétro-propagation.

[Fig. 4] illustre un diagramme fonctionnel d'un calculateur accélérateur configurable pour calculer une couche de neurones artificiels en propagation et en rétro-propagation selon un mode de réalisation de l'invention.

[Fig. 5] illustre la matrice de poids associée à la couche de neurones entièrement connectée à la couche précédente via des coefficients synaptiques distribués sur les mémoires de poids selon un mode de réalisation de l'invention.

[Fig. 6a] illustre un diagramme fonctionnel du calculateur accélérateur selon la figure 4 configuré selon la première configuration pour calculer une couche de neurones artificiels lors d'une phase de propagation.

[Fig. 6b] illustre un exemple de séquences de calcul réalisées par le calculateur selon l'invention configuré selon la première configuration lors d'une phase de propagation tel que représenté par la figure 6a.

[Fig. 7a] illustre un diagramme fonctionnel du calculateur accélérateur configuré selon la seconde configuration pour calculer une couche de neurones artificiels lors d'une phase de rétro-propagation.

[Fig. 7b] illustre un exemple de séquences de calcul réalisées par le calculateur selon l'invention configuré selon la seconde configuration lors d'une phase de rétro-propagation tel que représenté par la figure 7a.

[Fig. 7c] illustre un exemple de fonctionnement de l'ensemble d'accumulateurs selon le principe « premier entré premier sorti » dans le calculateur selon les figures 7b et 7a.

[Fig. 8] illustre un diagramme fonctionnel du calculateur accélérateur selon l'invention configuré pour effectuer la mise à jour des poids pendant une phase d'apprentissage.

[Fig. 9a] représente une première illustration du fonctionnement d'une couche de convolution d'un réseau de neurones convolutionnel avec un canal d'entrée et un canal de sortie.

[Fig. 9b] représente une deuxième illustration du fonctionnement d'une couche de convolution d'un réseau de neurones convolutionnel avec un canal d'entrée et un canal de sortie.

[Fig. 9c] représente une troisième illustration du fonctionnement d'une couche de convolution d'un réseau de neurones convolutionnel avec un canal d'entrée et un canal de sortie.

[Fig. 9d] représente une illustration du fonctionnement d'une couche de convolution d'un réseau de neurones convolutionnel avec plusieurs canaux d'entrée et plusieurs canaux de sortie.

A titre indicatif, on commence par décrire un exemple de structure globale d'un réseau de neurone convolutionnel contenant des couches convolutionnelles et des couches entièrement connectées.

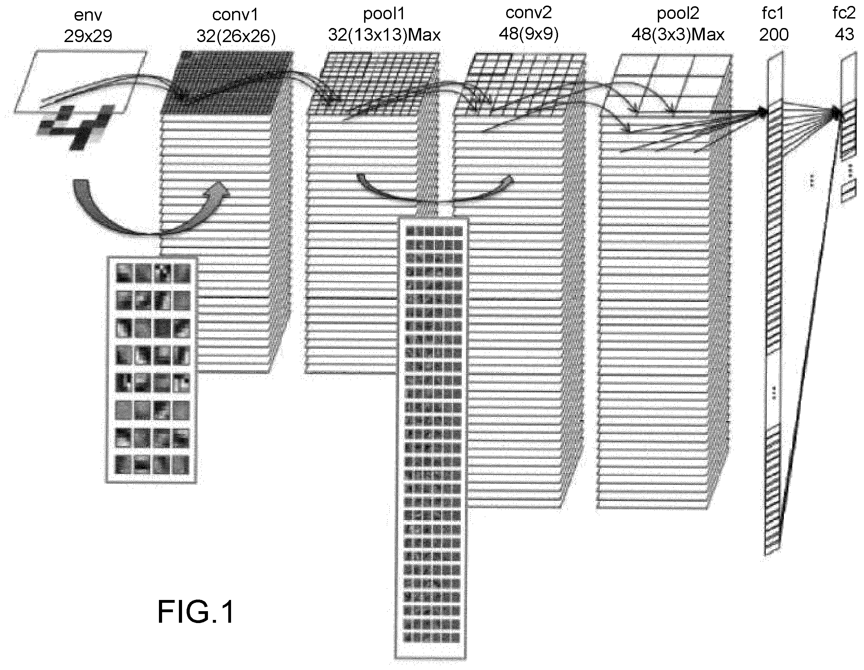

La figure 1 représente l'architecture globale d'un exemple de réseau convolutionnel pour la classification d'images. Les images en bas de la figure 1 représentent un extrait des noyaux de convolution de la première couche. Un réseau de neurones artificiel (encore appelé réseau de neurones « formel » ou désigné simplement par l'expression « réseau de neurones » ci-après) est constitué d'une ou plusieurs couches de neurones, interconnectées entre elles.

Chaque couche est constituée d'un ensemble de neurones, qui sont connectés à une ou plusieurs couches précédentes. Chaque neurone d'une couche peut être connecté à un ou plusieurs neurones d'une ou plusieurs couches précédentes. La dernière couche du réseau est appelée « couche de sortie ». Les neurones sont connectés entre eux par des synapses associées à des poids synaptiques, qui pondèrent l'efficacité de la connexion entre les neurones, constituent les paramètres réglables d'un réseau et qui stockent l'information comprise dans le réseau. Les poids synaptiques peuvent être positifs ou négatifs.

Les données d'entrée du réseau de neurones correspondent aux données d'entrée de la première couche du réseau. En parcourant la succession des couches de neurones, les données de sortie calculées par une couche intermédiaire correspondent aux données d'entrée de la couche suivante. Les données de sortie de la dernière couche de neurones correspondent aux données de sortie du réseau de neurones.

Les réseaux de neurones dit « convolutionnels » (ou encore « convolutional », « deep convolutional », « convnets ») sont en outre composés de couches de types particuliers telles que les couches de convolution, les couches de regroupement (« pooling » en langue anglo-saxonne) et les couches complètement connectés (« fully connected »). Par définition, un réseau de neurones convolutionnel comprend au moins une couche de convolution ou de « pooling ».

L'architecture du circuit calculateur accélérateur selon l'invention est compatible pour exécuter les calculs des couches convolutionnelles ou des couches entièrement connectées. Nous allons commencer dans un premier temps par la description du mode de réalisation adapté avec le calcul d'une couche entièrement connectée.

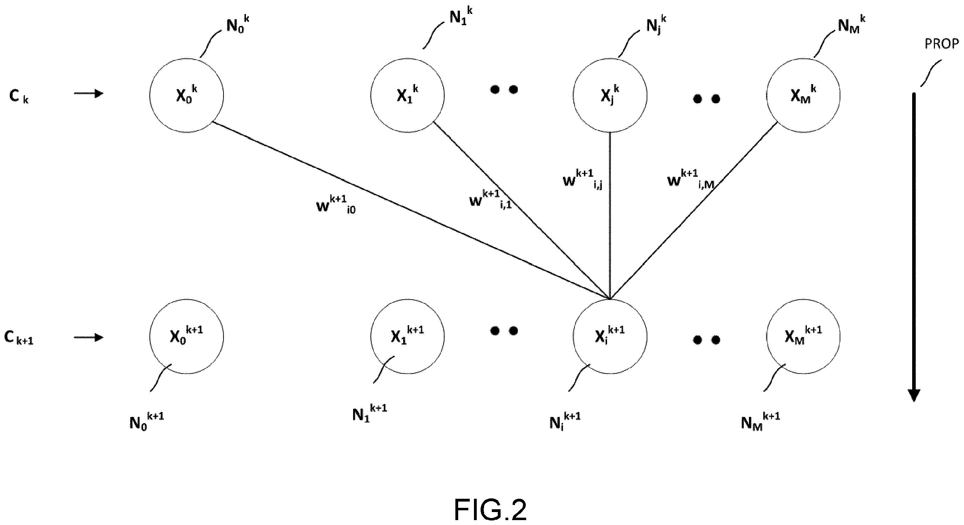

La figure 2 illustre un schéma d'un couple de couches de neurones entièrement connectées appartenant à un réseau de neurones convolutif pendant une phase d'inférence. La figure 2 sert à comprendre les mécanismes de base des calculs dans ce type de couches pendant une phase d'inférence où les données sont propagées à partir des neurones de la couche $C_k$ de rang k vers les neurones de la couche suivante $C_{k+1}$ de rang k+1.

La couche de neurones $C_k$ de rang k comprend M+1 neurones de rang j=0 à M avec M un entier positif supérieur ou égal à 1. Le neurone $N_j^k$ de rang j appartenant à la couche de rang k produit en sortie une valeur notée $X_j^k$.

La couche de neurones $C_{k+1}$ de rang k+1 comprend M'+1 neurones de rang i=0 à M' avec M' un entier positif supérieur ou égal à 1. Le neurone $N_i^{k+1}$ de rang i appartenant à la couche de rang k+1 produit en sortie une valeur notée $X_i^{k+1}$. Dans l'exemple de la figure 2, les deux couches successives $C_k$ et $C_{k+1}$ ont la même taille M+1.

La couche $C_{k+1}$ étant entièrement connectée, chaque neurone $N_i^{k+1}$ appartenant à cette couche est connectée par une synapse artificielle à chacun des neurones $N_i^k$. Le coefficient synaptique qui connecte le neurone $N_i^{k+1}$ de rang i de la couche $C_{k+1}$ au neurone $N_j^k$ de rang j de la couche $C_k$ est le scalaire $w_{ij}^{k+1}$. L'ensemble des coefficients synaptiques liant la couche $C_{k+1}$ à la couche $C_k$ forment ainsi une matrice de poids de taille (M'+1)x(M+1) notée $[MP]^{k+1}$. Dans la figure 2, la taille des deux couches consécutives est la même, la matrice de poids $[MP]^k$ est alors une matrice carrée de taille (M+1)x(M+1).

Soit $[L_i]^{k+1}$ le vecteur ligne d'indice i de la matrice de poids $[MP]^{k+1}$. $[L_i]^{k+1}$ est composé des coefficients synaptiques suivants :

$$[L_i]^{k+1} = (w_{i0}^{k+1}, w_{i1}^{k+1}, w_{i2}^{k+1}, w_{i3}^{k+1} \ldots, w_{i(M-2)}^{k+1}, w_{i(M-1)}^{k+1}, w_{iM}^{k+1}).$$

L'ensemble des coefficients synaptiques qui forment le vecteur ligne $[L_i]^{k+1}$ de la matrice de poids $[MP]^{k+1}$ correspondent à toutes les synapses connectées au neurone $N_i^{k+1}$ de rang i de la couche $C_{k+1}$ tel que représenté à la figure 2.

En suivant le sens de propagation « PROP » indiqué sur la figure 2, lors d'une phase d'inférence, la donnée $X_i^{k+1}$ associée au neurone $N_i^{k+1}$ de la couche $C_{k+1}$ est calculée par la formule suivante :

$$X_i^{(k+1)} = S(\sum_j (X_j^k \cdot w_{ij}^{k+1}) + b_i)$$ avec $b_i$ un coefficient appelé "biais" et $S(x)$ une fonction non-linéaire, comme une fonction ReLu par exemple. L'application de la fonction ReLu est réalisée par un microcontrôleur ou un circuit opérateur dédié différent du calculateur accélérateur objet de l'invention dont le rôle principal est le calcul de la somme pondérée $\sum_j (X_j^k \cdot w_{ij}^{k+1})$.

En développant la formule de la somme pondérée utilisée dans le calcul de $X_i^{(k+1)}$ pendant une propagation des données de la couche $C_k$ vers la couche $C_{k+1}$, on obtient la somme suivante :

$$X_i^{(k+1)} = S(X_0^k \cdot w_{i0}^{k+1} + X_1^k \cdot w_{i1}^{k+1} + X_2^k \cdot w_{i2}^{k+1} + \dots + X_{(M-1)}^k \cdot w_{i(M-1)}^{k+1} + X_M^k \cdot w_{iM}^{k+1} + b_i)$$

Cela montre alors que le sous-ensemble noté $F_i$ des coefficients synaptiques utilisés pour réaliser le calcul de la somme pondérée $\sum_j (X_j^k \cdot w_{ij}^{k+1})$ pour obtenir la donnée de sortie $X_i^{(k+1)}$ du neurone $N_i^{k+1}$ est $[L_i]^{k+1}$ le vecteur ligne d'indice i de la matrice de poids $[MP]^{k+1}$.

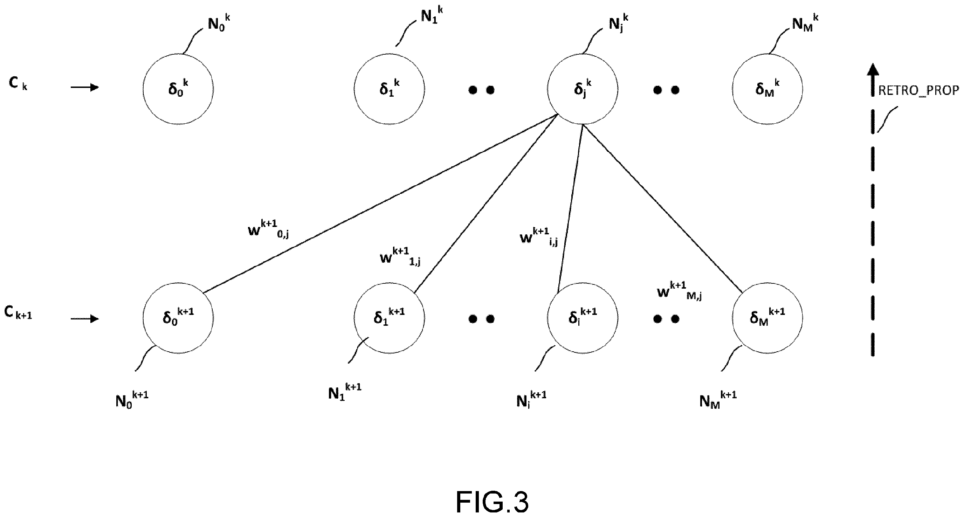

En préparation à la description de la figure 3, nous allons d'abord expliquer le déroulement de la phase d'apprentissage d'un réseau de neurones convolutifs qui se déroule selon les étapes suivantes :

Une première étape de propagation pour apprentissage consiste à exécuter le traitement d'un ensemble d'images d'entrée exactement de la même manière qu'en inférence (mais en virgule flottante). A la différence de l'inférence, il est nécessaire de stocker toutes les valeurs de $X_i^{(k)}$ (de toutes les couches, donc) pour toutes les images.

Lorsque la dernière couche de sortie est calculée, la deuxième étape de calcul de fonction de coût est déclenchée. Le résultat de l'étape précédente au niveau de la dernière couche de réseau est comparé au moyen d'une fonction de coût avec des références labellisées. La dérivée de la fonction de coût est calculée pour obtenir pour chaque neurone $N_i^K$ de la couche de sortie finale $C_K$ une erreur $\delta_i^K$. Les opérations de calcul de cette étape (fonction de coût + dérivation) sont réalisées par un microcontrôleur embarqué différent du calculateur objet de l'invention.

L'étape suivante consiste à rétro-propager les erreurs calculées dans l'étape précédente à travers les couches du réseau de neurones à partir de la couche de sortie de rang K. Plus de détails sur cette phase de rétro-propagation seront exposés dans la description de la figure 3.

L'étape finale correspond à la mise à jour des coefficients synaptiques $w_{ij}^k$ de tout le réseau de neurones en se basant sur les résultats des calculs précédents pour chaque neurone de chaque couche.

La figure 3 illustre un schéma du même couple de couches de neurones entièrement connectées décrit dans la figure 2 mais pendant une phase de rétro-propagation. La figure 3 sert à comprendre les mécanismes de base des calculs dans ce type de couches pendant une phase de rétro-propagation d'erreurs lors de la phase d'apprentissage. Les données correspondent à des erreurs calculées, notées généralement $\delta_i$, qui sont rétro-propagées à partir des neurones de la couche $C_{k+1}$ de rang k+1 vers les neurones de la couche suivante $C_k$ de rang k.

Le sens de la rétro-propagation est illustré sur la figure 3.

La figure 3 illustre le même couple de couches de neurones $C_k$ et $C_{k+1}$ que celui illustré dans la figure 2. L'ensemble des coefficients synaptiques liant la couche $C_{k+1}$ à la couche $C_k$ forment toujours la matrice de poids de taille (M+1)x(M+1) notée $[MP]^{k+1}$. La différence par rapport à la figure 2 réside dans la nature des données d'entrée et de sortie pour le calcul qui correspondent à des erreurs $\delta_i^{k+1}$ et le sens de propagation inversé.

En partant dans le sens de rétro-propagation « RETRO_PROP », lors d'une phase d'apprentissage, l'erreur $\delta_j^k$ associée au neurone $N_j^k$ de la couche $C_k$ est calculée par la formule suivante : $$\delta_j^k = \sum_i (\delta_i^{k+1} \cdot w_{ij}^{k+1}) \cdot \partial S(x)/\partial x$$ avec $\partial S(x)/\partial x$ la dérivée de la fonction d'activation qui est égale à 0 ou 1 dans le cas où on utilise une fonction ReLu. Plus généralement, la multiplication par la dérivée de la fonction d'activation est réalisée par un circuit opérateur dédié différent du calculateur accélérateur objet de l'invention dont le rôle principal est le calcul de la somme pondérée $$\sum_i (\delta_i^{k+1} \cdot w_{ij}^{k+1}).$$

En développant la formule de la somme pondérée utilisée dans le calcul de $\delta_j^k$ pendant une rétro-propagation des erreurs de la couche $C_{k+1}$ vers la couche $C_k$ on obtient la somme suivante :

$$\delta_j^{\ k} = \delta_0^{\ k+1} \cdot w_{0j}^{\ k+1} + \delta_1^{\ k+1} \cdot w_{1j}^{\ k+1} + \delta_2^{\ k+1} \cdot w_{2j}^{\ k+1} + \ldots + \delta_{M-1}^{\ k+1} \cdot w_{(M-1)j}^{\ k+1} + \delta_M^{\ k+1} \cdot w_{Mj}^{\ k+1}$$

Cela montre alors que le sous-ensemble des coefficients synaptiques utilisés pour réaliser le calcul de la somme pondérée $\sum_i \left( \delta_i^{k+1} \cdot w_{ij}^{k+1} \right)$ du neurone $N_j^k$, correspond à $[C_j]^{k+1}$ le vecteur colonne de la matrice de poids $[MP]^{k+1}$ d'indice j de la matrice de poids $[MP]^{k+1}$ avec $[C_j]^{k+1} = (w_0^{k+1}, w_{ij}^{k+1}, w_{2j}^{k+1}, w_{3j}^{k+1} \ldots, w_{(M-1)j}^{k+1}, w_{(M-1)j}^{k+1}, w_{Mj}^{k+1})$.

Sur la figure 3 on peut vérifier que l'ensemble des synapses qui connecte le neurone $N_j^k$ de la couche $C_k$ correspond aux coefficients synaptiques de la colonne $[C_j]^{k+1}$.

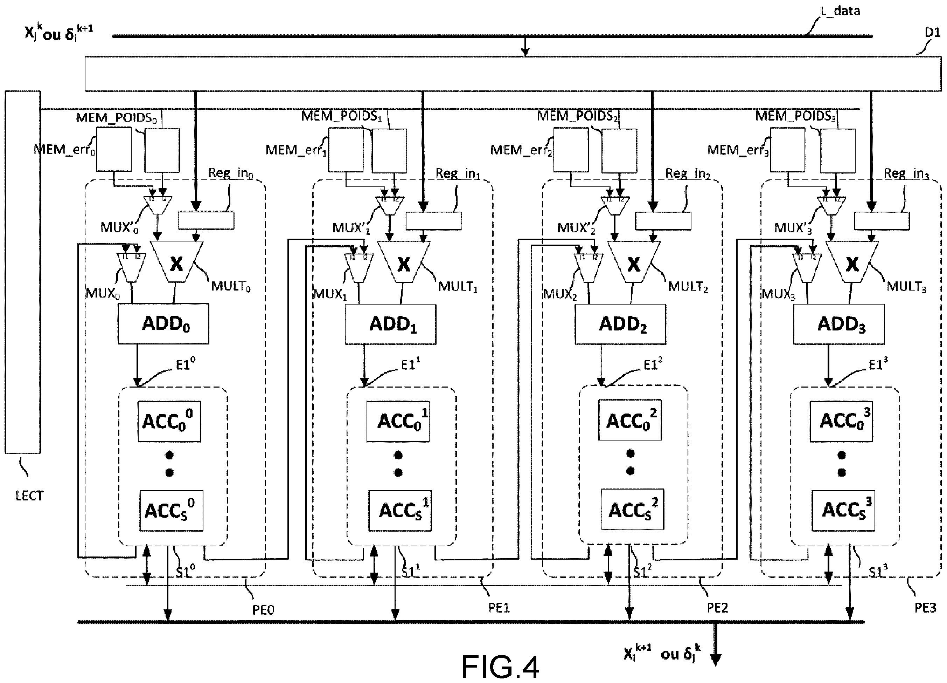

La figure 4 illustre un diagramme fonctionnel d'un calculateur accélérateur configurable pour calculer une couche de neurones artificiels en propagation et en rétro-propagation selon un mode de réalisation de l'invention.

Un objectif du calculateur CALC de couche de neurones selon l'invention consiste à utiliser les mêmes mémoires pour stocker les coefficients synaptiques selon une distribution bien choisie pour exécuter à la fois la phase de propagation de données et la phase de rétro-propagation d'erreurs Le calculateur est configurable selon deux configurations distinctes, notée respectivement CONF1 et CONF2, implémentées via un agencement spécifique de multiplexeurs décrit ultérieurement. Le calculateur permet ainsi l'exécution des calculs des sommes pondérées pendant une phase de propagation de données ou une phase de rétro-propagation d'erreurs selon la configuration choisie.

Le calculateur CALC selon l'invention comprend une ligne de transmission notée L_data pour distribuer des données d'entrée $X_j^k$ ou d'erreur $\delta_i^{k+1}$ selon l'exécution d'une phase de propagation ou de rétro-propagation ; un ensemble d'unités de calcul notées $PE_n$ de rangs n=0 à N avec N un entier positif supérieur ou égal à 1 pour calculer une somme de données d'entrée pondérées par des coefficients synaptiques ; un ensemble de mémoires de poids notées $MEM\_POIDS_n$ tel que chaque mémoire de poids est connectée à une unité de calcul; des moyens de contrôle pour configurer le fonctionnement et les connexions internes ou externes des unités de calcul selon la première configuration CONF1 ou la seconde configuration CONF2.

Le calculateur CALC comprend en outre un étage de lecture noté LECT connecté à chaque mémoire de poids $MEM\_POIDS_n$ pour commander la lecture des coefficients synaptiques $w_{i,j}^k$ pendant l'exécution des opérations de calcul des sommes pondérées.

Le calculateur CALC comprend en outre un ensemble de mémoires d'erreurs notées $MEM\_err_n$ de rangs n=0 à N avec N+1 le nombre d'unités de calcul $PE_n$ dans le calculateur CALC. Chaque mémoire d'erreur est associée à une unité de calcul pour stocker un sous ensemble d'erreurs calculées $\delta_j^k$ et qui sont utilisées pendant la phase de mise à jour des poids.

Pour comprendre le fonctionnement du calculateur accélérateur CALC selon l'invention pour chaque phase de calcul à savoir la propagation ou la rétro propagation, la figure 4 illustre aussi les sous-blocs constituant une unité de calcul $PE_n$. A titre indicatif, et pour simplifier l'explication de l'invention, nous allons nous limiter à un exemple du calculateur contenant quatre unités de calcul notées respectivement $PE_0$, $PE_1$, $PE_2$, $PE_3$. Cela implique alors l'utilisation de quatre mémoires de poids notées respectivement $MEM\_POIDS_0$, $MEM\_POIDS_1$, $MEM\_POIDS_2$, $MEM\_POIDS_3$ et quatre mémoires d'erreurs notées respectivement $MEM\_err_0$, $MEM\_err_1$, $MEM\_err_2$, $MEM\_err_3$.

Chaque unité de calcul $PE_n$ de rang n=0 à 3 comprend un registre d'entrée noté $Reg\_in_n$ pour stocker une donnée d'entrée utilisée lors du calcul de la somme pondérée qu'elle soit une donnée propagée $X_i^{(k)}$ ou une erreur rétro-propagée $\delta_i^{k+1}$ selon la phase exécutée ; un circuit multiplieur noté MUL $T_n$ à deux entrées et une sortie, un circuit additionneur noté $ADD_n$ ayant une première entrée connectée à la sortie du circuit multiplieur MUL $T_n$ et étant configuré pour réaliser des opérations de sommation de résultats de calcul partiels d'une somme pondérée ; au moins un accumulateur noté $ACC_i^n$ pour stocker des résultats de calcul partiels ou finaux de la somme pondérée calculée par l'unité de calcul $PE_n$ de rang n ou une autre unité de calcul de rang différent selon la configuration sélectionnée.

La distribution des données d'entrée provenant de la ligne de transmission L_data aux différentes unités de calcul $PE_n$ est réalisée via le contrôle de l'activation du chargement des registres d'entrée $Reg\_in_n$. La commande d'activation du chargement d'un registre d'entrée $Reg\_in_n$ est réalisée par les moyens de contrôle du système. Si le chargement d'un registre $Reg\_in_n$ n'est pas activé, le registre garde la donnée stockée du cycle de calcul précédent. Si le chargement d'un registre $Reg\_in_n$ est activé, il stocke la donnée transmise par la ligne de transmission L_data pendant le cycle de calcul courant.

Alternativement, le calculateur CALC comprend en outre un organe de distribution noté D1 commandé par les moyens de contrôle pour organiser la distribution des données d'entrée provenant de la ligne de transmission L_data aux unités de calcul $PE_n$ selon la configuration de calcul choisie.

Dans le mode de réalisation décrit, lorsque le nombre de neurones par couche est supérieur au nombre d'unités de calcul $PE_n$ dans le calculateur CALC, chaque unité de calcul $PE_n$ comprend une pluralité d'accumulateurs $ACC_i^n$. L'ensemble des accumulateurs appartenant à la même unité de calcul, comporte une entrée notée $E1^n$ en écriture sélectionnable parmi les entrées de chaque accumulateur de l'ensemble et une sortie notée $S1^n$ en lecture sélectionnable

parmi les sorties de chaque accumulateur de l'ensemble. Il est possible de réaliser cette fonctionnalité de sélection d'entrée en écriture et de sortie en lecture d'un empilement de registres accumulateurs par des commandes d'activation de chargement des registres en écriture et de multiplexeurs pour les sorties non représentés sur la figure 4.

Chaque unité de calcul $PE_n$ de rang n=0 à 3 comprend en outre un multiplexeur $MUX_n$ ayant deux entrées notées I1 et I2 et une sortie connectée à la seconde entrée de l'additionneur $ADD_n$ appartenant à l'unité de calcul $PE_n$.

Pour les unités de calcul $PE_n$ de rang n=1 à 3, la première entrée I1 d'un multiplexeur $MUX_n$ est connectée à la sortie $S1^n$ de l'ensemble des accumulateurs $\{ACC_0^n \ ACC_1^n \ ACC_2^n...\}$ appartenant à l'unité de calcul de rang n, la seconde entrée I2 est connectée à la sortie $S1^{n-1}$ de l'ensemble des accumulateurs $\{ACC_0^{n-1} \ ACC_1^{n-1} \ ACC_2^{n-1}..\}$ de l'unité de calcul de rang n-1. La sortie du multiplexeur $MUX_n$ est connectée à la seconde entrée du circuit additionneur $ADD_n$ appartenant à la même unité de calcul $PE_n$ de rang n.

Pour l'unité de calcul initiale $PE_0$ de rang 0, les deux entrées du multiplexeur $MUX_0$ sont connectées à la sortie $S1^0$ de l'ensemble des accumulateurs $\{ACC_0^0 \ ACC_1^0 \ ACC_2^0\}$ de l'unité de calcul initiale de rang 0. Il est possible de se passer de ce multiplexeur mais il a été gardé dans ce mode de réalisation pour obtenir des unités de calcul symétriques.

Chaque unité de calcul $PE_n$ de rang n=0 à 3 comprend en outre un second multiplexeur $MUX'_n$ à deux entrées et une sortie connectée à la seconde entrée du circuit multiplieur $MUL \ T_n$ appartenant à la même unité de calcul $PE_n$. La première entrée du multiplexeur $MUX'_n$ est connectée à la mémoire d'erreur $MEM\_err_n$ de rang n et la seconde entrée est connectée à la mémoire de poids $MEM\_POIDS_n$ de rang n. Ainsi, le multiplexeur $MUX'_n$ permet de sélectionner si le multiplieur $MUL \ T_n$ calcule le produit de la donnée d'entrée stockée dans le registre $Reg\_in_n$ par un coefficient synaptique $w_{ij}^k$ provenant de la mémoire de poids $MEM\_POIDS_n$ (pendant une propagation ou rétro-propagation) ou par une valeur d'erreur $\delta_j^k$ stockée dans la mémoire d'erreur $MEM\_err_n$ (pendant la mise à jour des poids).

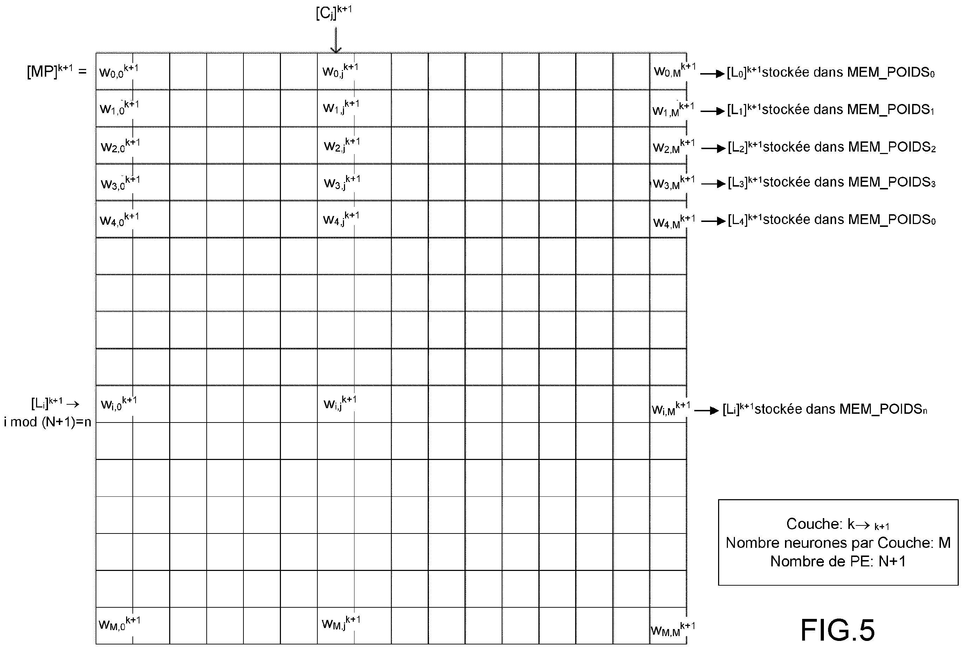

La figure 5 illustre la matrice de poids $[MP]^{k+1}$ associée à la couche de neurones $C_{k+1}$ entièrement connectée à la couche précédente $C_k$ via des coefficients synaptiques $w_{ij}^{k+1}$.

Comme démontré précédemment, le sous-ensemble des coefficients synaptiques nécessaires et suffisants pour réaliser le calcul de la somme pondérée $\left(\sum_j (X_j^k . w_{ij}^{k+1})\right)$ pour obtenir la donnée de sortie $X_i^{(k+1)}$ du neurone $N_i^{k+1}$ pendant une phase de propagation correspond à $[L_i]^{k+1}$ le vecteur ligne d'indice i de la matrice de poids $[MP]^{k+1}$.

Pour résoudre la problématique liée à la minimisation de la consommation énergétique du réseau de neurones, les coefficients synaptiques doivent être distribués judicieusement sur l'ensemble des mémoires de poids $MEM\_POIDS_n$ de manière respecter les critères suivants : la possibilité d'intégrer les mémoires de poids dans la même puce du calculateur ; la minimisation du nombre d'opérations d'écriture sur les mémoires de poids et la minimisation des trajets parcourus par les données lors d'un échange entre une unité de calcul et une mémoire de poids.

Pendant une phase de propagation de données, L'unité de calcul de rang n $PE_n$ réalise l'intégralité des opérations de multiplication et d'addition pour calculer la somme pondérée $\sum_j (X_j^k . w_{ij}^{k+1})$ pour obtenir la donnée de sortie $X_i^{(k+1)}$ du neurone $N_i^{k+1}$, la mémoire de poids $MEM\_POIDS_n$ de rang n associée à l'unité de calcul $PE_n$ de rang n doit contenir les coefficients synaptiques qui forment le vecteur ligne $[L_i]^{k+1}$ de la matrice $[MP]^{k+1}$.

Si la couche de neurone contient un nombre de neurones supérieur au nombre d'unités de calcul, les calculs sont organisés de la manière suivante : L'unité de calcul de rang n $PE_n$ réalise l'intégralité des opérations de multiplication et d'addition pour calculer la somme pondérée de chacun des neurones de rang i $N_i^{k+1}$ tel que i modulo (N+1) est égal à n .

A titre d'exemple, si la couche $C_{k+1}$ contient seize neurones et le calculateur CALC comprend N=4 unités de calcul $\{PE_0, PE_1, PE_2, PE_3\}$:

- L'unité de calcul $PE_0$, calcule les données de sortie $X_i^{(k+1)}$ des neurones $N_0^{k+1}, N_4^{k+1}, N_8^{k+1}, N_{12}^{k+1}$.
- Parallèlement, L'unité de calcul $PE_1$, calcule les données de sortie $X_i^{(k+1)}$ des neurones $N_1^{k+1}, N_5^{k+1}, N_9^{k+1}, N_{13}^{k+1}$.
- Parallèlement, L'unité de calcul $PE_2$, calcule les données de sortie $X_i^{(k+1)}$ des neurones $N_2^{k+1}, N_6^{k+1}, N_{10}^{k+1}, N_{14}^{k+1}$.
- Parallèlement, L'unité de calcul $PE_1$, calcule les données de sortie $X_i^{(k+1)}$ des neurones $N_3^{k+1}, N_7^{k+1}, N_{11}^{k+1}, N_{15}^{k+1}$.

Pour réaliser le parallélisme de calcul décrit précédemment pendant une phase de propagation (critère de performance de calcul), tout en respectant les critères liés aux mémoires cités ci-dessus (critère de consommation et d'implémentation), les coefficients synaptiques $w_{ij}^{k+1}$ sont distribués sur les mémoires de poids de manière à ce que chaque mémoire de poids de rang n $MEM\_POIDS_n$ contienne exclusivement les vecteurs lignes $[L_i]^{k+1}$ des matrices $[MP]^{k+1}$ pour toutes les couches entièrement connectées tel que i modulo (N+1)=n.

Nous allons garder cette distribution pour l'explication de déroulement des calculs exécutés par le calculateur selon l'invention avec les figures suivantes :

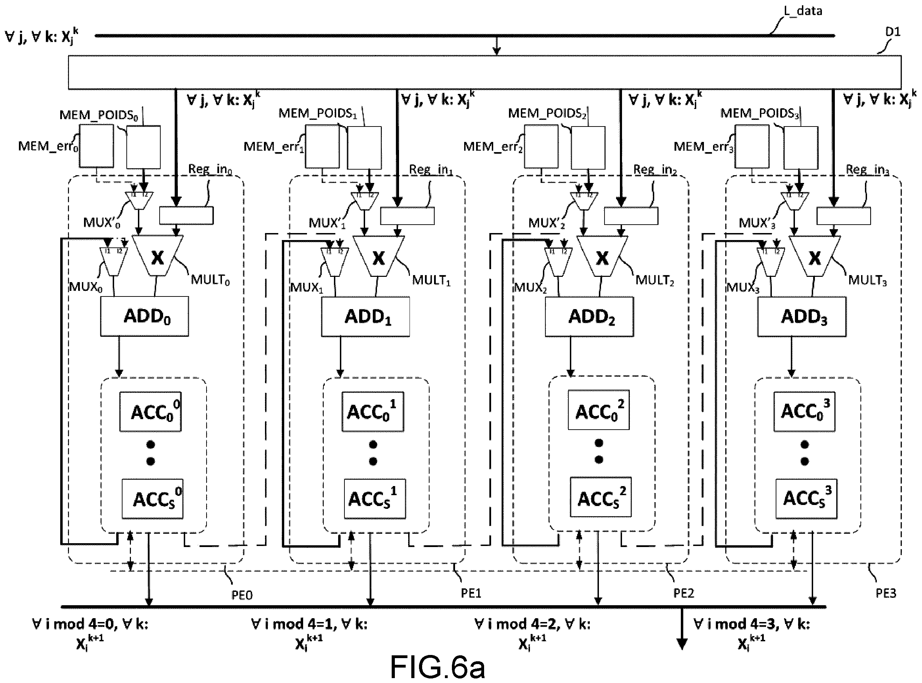

La figure 6a illustre un diagramme fonctionnel du calculateur accélérateur CALC configuré selon la première configuration CONF1 pour calculer une couche de neurones artificiels lors d'une phase de propagation.

Lors d'une phase de propagation des données, chaque multiplexeur $MUX'_n$ de rang n est configuré par les moyens de contrôle pour sélectionner l'entrée connectée à la mémoire de poids associée.

Lorsque la première configuration CONF1 est choisie, les moyens de contrôle configurent chaque multiplexeur $MUX_n$ appartenant à l'unité de calcul $PE_n$ pour sélectionner l'entrée I1 connectée à l'ensemble des accumulateurs $\{ACC_0^n \, ACC_1^n \, ACC_2^n..\}$ de la même unité de calcul. Ainsi, les unités de calcul $PE_n$ sont déconnectées entre elles lorsque la configuration CONF1 est choisie.

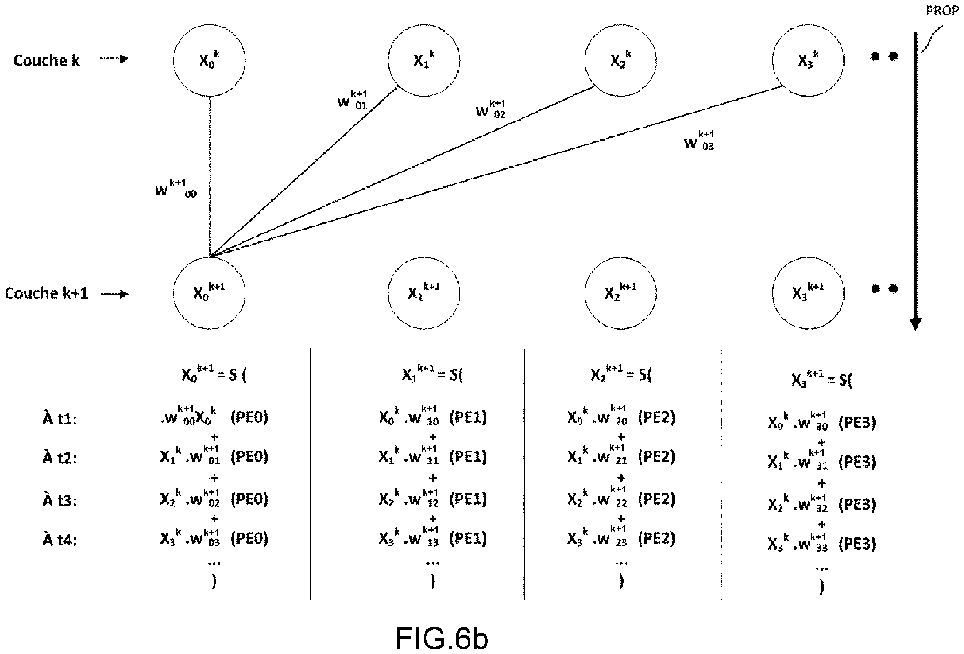

La figure 6b illustre un exemple de séquences de calcul réalisées par le calculateur configuré selon la première configuration lors d'une phase de propagation tel que représenté par la figure 6a.

Nous rappelons que chaque mémoire de poids de rang n contient le sous ensemble de coefficients synaptiques correspondant au vecteur ligne $[L_i]^{k+1}$ de rang i de la matrice $[MP]^{k+1}$ associée à la couche de neurones $C_{k+1}$ tel que i modulo (N+1)=n.

Lorsque le calculateur est configuré selon la première configuration CONF1, les moyens de contrôle commandent le chargement des registres $Reg\_in_n$ (ou l'organe de distribution D1 dans un mode de réalisation alternatif) pour fournir simultanément à toutes les unités de calcul $PE_n$ la même donnée d'entrée $X_i^k$ provenant de la couche précédente $C_k$.

A un instant t1, l'unité de calcul $PE_0$ calcule le produit $w_{00}^{k+1}.X_0^k$ correspondant au premier terme de la somme pondérée $\sum_j(X_j^k . w_{0j}^{k+1})$ correspondant à la donnée de sortie du neurone $N_0^{k+1}$; l'unité de calcul $PE_1$ calcule le produit $w_{10}^{k+1}.X_0^k$ correspondant au premier terme de la somme pondérée $\sum_j(X_j^k . w_{1j}^{k+1})$ correspondant à la donnée de sortie du neurone $N_1^{k+1}$; l'unité de calcul $PE_2$ calcule le produit $w_{20}^{k+1}X_0^k$ correspondant au premier terme de la somme pondérée $\sum_j(X_j^k . w_{2j}^{k+1})$ correspondant à la donnée de sortie du neurone $N_2^{k+1}$; l'unité de calcul $PE_3$ calcule le produit $w_{30}^{k+1}.X_0^k$ correspondant au premier terme de la somme pondérée $\sum_j(X_j^k . w_{3j}^{k+1})$ correspondant à la donnée de sortie du neurone $N_3^{k+1}$. Chaque unité de calcul $PE_n$ stocke le premier terme de la somme pondérée obtenu dans un accumulateur $ACC_0^n$ de l'ensemble des accumulateurs associé à la même unité de calcul. A t2, l'unité de calcul $PE_0$ calcule le produit $w_{01}^{k+1}.X_1^k$ correspondant au deuxième terme de la somme pondérée $\sum_j(X_j^k . w_{0j}^{k+1})$ correspondant à la donnée de sortie du neurone $N_0^{k+1}$ et l'additionneur $ADD_0$ réalise la sommation entre le premier terme $w_{00}^{k+1}X_0^k$ stocké dans l'accumulateur $ACC_0^0$ et le deuxième terme $w_{01}^{k+1}.X_1^k$ via le rebouclage interne à l'unité de calcul selon la configuration CONF1; l'unité de calcul $PE_1$ calcule le produit $w_{11}^{k+1}.X_1^k$ correspondant au deuxième terme de la somme pondérée $\sum_j(X_j^k . w_{1j}^{k+1})$ correspondant à la donnée de sortie du neurone $N_1^{k+1}$ et l'additionneur $ADD_1$ réalise la sommation entre le premier terme $w_{10}^{k+1}.X_0^k$ stocké dans l'accumulateur $ACC_0^1$ et le deuxième terme $w_{11}^{k+1}.X_1^k$ via le rebouclage interne à l'unité de calcul selon la configuration CONF1. Le même processus de calcul est exécuté par les unités de calcul $PE_2$ et $PE_3$ pour calculer et stocker les résultats partiels des neurones $N_2^{k+1}$ et $N_3^{k+1}$.

Si la somme pondérée contient M termes (calculés à partir de M neurones de la couche $C_k$), l'opération décrite précédemment est réitérée M fois jusqu'à l'obtention des résultats finaux $X_i^{k+1}$ des quatre premiers neurones de la couche de sortie $C_{k+1}$ à savoir $\{N_0^{k+1}, N_1^{k+1}, N_2^{k+1} \, N_3^{k+1}\}$. Au cycle $t_{M+1}$, l'unité de calcul $PE_0$ commence une nouvelle série d'itérations pour calculer les termes de la somme pondérée $X_4^{k+1}$ du neurone $N_1^{k+1}$; l'unité de calcul $PE_1$ commence une nouvelle série d'itérations pour calculer les termes de la somme pondérée $X_5^{k+1}$ du neurone $N_5^{k+1}$, l'unité de calcul $PE_2$ commence une nouvelle série d'itérations pour calculer les termes de la somme pondérée $X_6^{k+1}$ du neurone $N_6^{k+1}$, l'unité de calcul $PE_3$ commence une nouvelle série d'itérations pour calculer les termes de la somme pondérée $X_7^{k+1}$ du neurone $N_7^{k+1}$. Ainsi après M cycles, le calculateur CALC a calculé les neurones $\{N_4^{k+1}, N_5^{k+1}, N_6^{k+1} \, N_7^{k+1}\}$.

L'opération est réitérée jusqu'à l'obtention de tous les $X_i^{k+1}$ de la couche de sortie $C_{k+1}$. Ce procédé de calcul réalisé par le calculateur ne nécessite aucune opération d'écriture dans les mémoires de poids $MEM\_POIDS_n$ car la distribution des coefficients synaptiques $w_{i,j}^{k+1}$ permet à chaque unité de calcul de réaliser toutes les opérations de multiplication nécessaires et suffisantes pour calculer le sous ensemble des neurones de sortie qui lui sont associés.

Nous allons présenter ci-dessous une deuxième méthode de calcul compatible avec le calculateur CALC et permettant de minimiser le nombre d'écriture sur les registres d'entrée $Reg\_in_n$.

Alternativement, un autre procédé de calcul de la couche $C_{k+1}$ entièrement connectée peut être exécuté par le calculateur CALC tout en évitant de charger une donnée d'entrée $X_i^k$ dans les registres d'entrée $Reg\_in_n$ à plusieurs reprises.

Pour réaliser la méthode de calcul alternative, le calculateur CALC fonctionne de la manière suivante : A t1, les mêmes calculs sont réalisés par chaque unité de calcul $PE_n$ pour obtenir les premiers termes de la somme pondérée de chacun des neurones $\{N_0^{k+1}, N_1^{k+1}, N_2^{k+1} N_3^{k+1}\}$ qui sont stockés dans un des accumulateurs associés. A t2, contrairement à la méthode de calcul précédente, l'unité de calcul $PE_0$ de rang n=0 ne calcule pas le deuxième terme de la somme pondérée des neurones de sortie $N_0^{k+1}$ mais calcule le premier terme de la somme pondérée du neurone de sortie $N_1^{k+1}$ et stocke le résultat dans un autre accumulateur $ACC_1^0$ de la même unité de calcul. Ensuite à t3, l'unité de calcul $PE_0$ calcule le premier terme du neurone de sortie $N_8^{k+1}$ et enregistre le résultat dans l'accumulateur suivant $ACC_2^0$. L'opération est réitérée jusqu'à l'obtention de tous les premiers termes de chaque somme pondérée de tous les neurones de sortie $N_i^{k+1}$ tel que i modulo (N+1)= 0 par l'unité de calcul $PE_0$.

Parallèlement, chaque unité de calcul $PE_n$ de rang n calcule et enregistre les premiers résultats partiels de tous les neurones de sortie $N_i^{k+1}$ tel que i modulo (N+1)= n.

Une fois que les premiers résultats partiels de chaque neurone de sortie sont calculés et enregistrés dans l'accumulateur correspondant, la donnée d'entrée suivante $X_1^k$ est propagée vers tous les registres d'entrée $Reg\_in_n$ pour calculer et additionner le deuxième terme de chaque somme pondérée selon le même principe de calcul. La même opération est répétée jusqu'à avoir calculé et additionné tous les résultats partiels de toutes les sommes pondérées de chaque neurone de sortie.

Cela permet d'éviter d'écrire la même donnée d'entrée $X_i^k$ plusieurs fois dans les registres d'entrée $Reg\_in_n$.

Nous rappelons que dans le cas où le nombre de neurones de sortie $N_i^{k+1}$ est supérieur au nombre d'unités de calcul, il est nécessaire d'avoir une pluralité d'accumulateurs dans chaque unité de calcul. Le nombre minimal d'accumulateurs dans une unité de calcul est égal au nombre de neurones de sortie $N_i^{k+1}$ noté M+1 divisé par le nombre d'unités de calcul N+1, et plus précisément arrondi à l'entier supérieur du résultat de division.

Le calculateur CALC associé au fonctionnement décrit précédemment, configuré selon la première configuration CONF1 et avec une distribution bien déterminée des coefficients synaptiques $w_{ij}^{k+1}$ entre les mémoires de poids $MEM\_POIDS_n$, exécute toutes les opérations de calcul d'une couche de neurones entièrement connectée pendant une propagation des données ou une inférence.

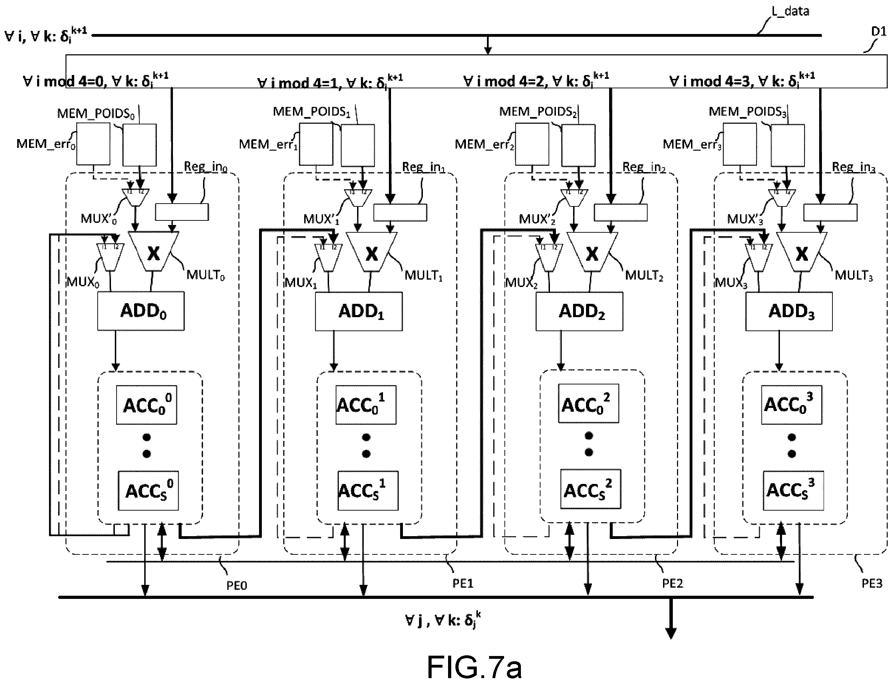

La figure 7a illustre un diagramme fonctionnel du calculateur accélérateur CALC configuré selon la seconde configuration CONF2 pour calculer une couche de neurones artificiels lors d'une phase de rétro-propagation.

Lors d'une phase de rétro-propagation des erreurs, chaque multiplexeur $MUX'_n$ de rang n est configuré par les moyens de contrôle pour sélectionner l'entrée connectée à la mémoire de poids associée.

Lorsque la seconde configuration CONF2 est choisie, les moyens de contrôle configurent chaque multiplexeur $MUX_n$ appartenant à l'unité de calcul $PE_n$ avec n=1 à N pour sélectionner la seconde entrée I2 connectée à la sortie $S1^{n-1}$ de l'ensemble des accumulateurs $\{ACC_0^{n-1} ACC_1^{n-1} ACC_2^{n-1}..\}$ de l'unité de calcul précédente $PE_{n-1}$ de rang n-1 . Ainsi, l'additionneur $ADD_n$ de chaque unité de calcul $PE_n$ (sauf pour l'unité de calcul initiale) reçoit les résultats de calculs partiels provenant de l'unité de calcul précédente pour l'additionner à la sortie du circuit multiplieur $MULT_n$. Concernant l'unité de calcul initiale $PE_0$, l'additionneur $ADD_0$ est toujours connecté à l'ensemble des accumulateurs $\{ACC_0^0 ACC_1^0 ACC_2^0..\}$ de la même unité de calcul.

Nous rappelons que d'une part chaque mémoire de poids $MEM\_POIDS_n$ de rang n comprend chaque vecteur ligne $[L_i]^{k+1} = (w_{i0}^{k+1}, w_{i1}^{k+1}, w_{i2}^{k+1}, w_{i3}^{k+1}..... ,w_{i(M-2)}^{k+1}, w_{i(M-1)}^{k+1}, w_{iM}^{k+1})$ de la matrice $[MP]^{k+1}$ tel que i modulo (N+1)= n .

D'autre part, le sous-ensemble des coefficients synaptiques utilisés pour réaliser le calcul de la somme pondérée $\sum_i \left( \delta_i^{k+1} \cdot w_{ij}^{k+1} \right)$ pour obtenir l'erreur de sortie $\delta_j^k$ du neurone $N_j^k$ correspond à $[C_j]^{k+1}$ le vecteur colonne de la matrice de poids $[MP]^{k+1}$ d'indice j de la matrice de poids $[MP]^{k+1}$ avec $[C_j]^{k+1} = (w_{0j}^{k+1}, w_{ij}^{k+1}, w_{2j}^{k+1}, w_{3j}^{k+1}..... ,w_{(M-2)j}^{k+1}, w_{(M-1)j}^{k+1}, w_{Mj}^{k+1})$.

Ainsi, une unité de calcul $PE_n$ de rang n ne peut pas réaliser seule l'intégralité des opérations de multiplication pour calculer la somme pondérée $\sum_i \left( \delta_i^{k+1} \cdot w_{ij}^{k+1} \right)$. Dans ce cas, l'exécution des opérations de calcul d'un neurone de sortie $N_i^k$ pendant une phase de rétro-propagation doit être partagée par l'ensemble des unités de calcul, d'où l'établissement d'une connexion en série entre les unités de calcul pour pouvoir transférer les résultats partiels à travers la chaine composée des unités de calcul $PE_n$.

Lorsque la seconde configuration CONF2 est sélectionnée, les différents ensembles d'accumulateurs $ACC_j^i$ forment une matrice de registres interconnectés pour fonctionner selon un principe « premier entré premier sorti » (FIFO en Anglais pour First In First Out). Sans perte de généralité, ce type d'implémentation est un exemple pour propager le flux de résultats partiels entre la dernière unité de calcul et la première unité de calcul de la chaine. Un exemple simplifié pour expliquer le principe du fonctionnement de la mémoire « FIFO » dans le calculateur selon l'invention sera décrit ultérieurement.

Dans un mode de réalisation alternatif, il est possible d'implémenter le fonctionnement selon le principe « premier entré premier sorti » (FIFO) en utilisant un étage mémoire de type FIFO dont l'entrée est connectée à l'accumulateur $ACC_0^N$ de la dernière unité de calcul $PE_N$ et la sortie est connectée l'entrée I2 du multiplexeur $MUX_0$ de l'unité de calcul initiale $PE_0$. Dans ce mode de réalisation chaque unité de calcul $PE_n$ de rang n comprend uniquement un accumulateur $ACC_0^n$ comprenant les résultats partiels du calcul de la somme pondérée réalisé par la même unité de calcul $PE_n$.

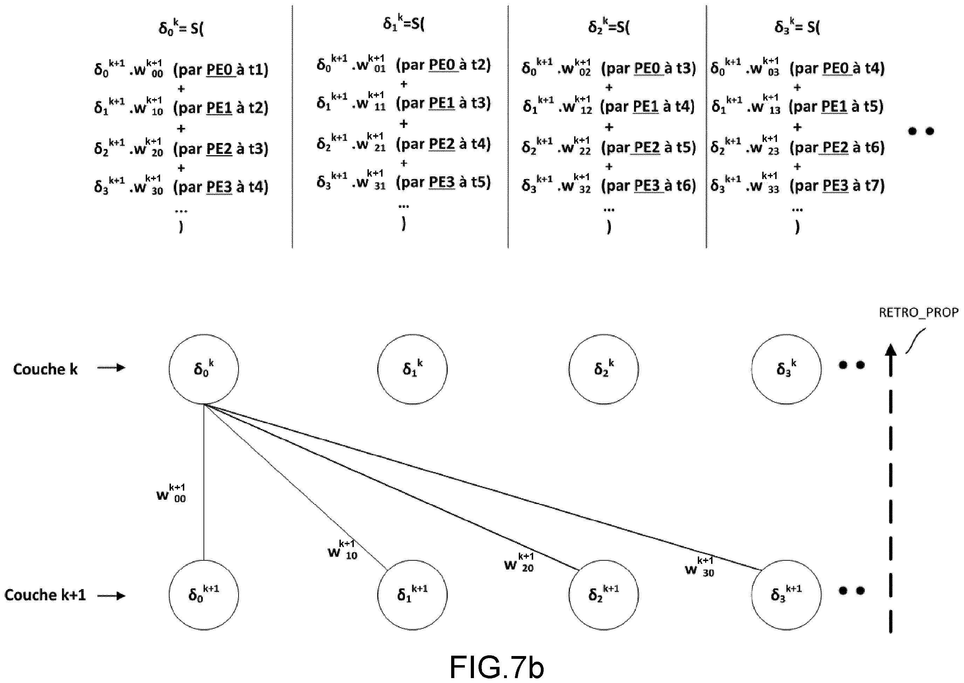

La figure 7b illustre un exemple de séquences de calcul réalisées par le calculateur CALC selon l'invention configuré selon la seconde configuration CONF2 lors d'une phase de rétro-propagation tel que représenté par la figure 7a.

Au 1er cycle de calcul t1, l'unité de calcul $PE_0$ multiplie la première donnée d'erreur $\delta_0^{(k+1)}$ par le poids $w_{00}^{(k+1)}$ et transmet le résultat à l'unité de calcul suivant PE1 qui, au deuxième cycle de calcul t2, y additionne le produit de la deuxième donnée $\delta_1^{(k+1)}$ par le poids $w_{10}$ et transmet le résultat à l'unité de calcul PE2, et ainsi de suite pour calculer la sortie jusqu'à obtenir la somme partielle constituée des quatre premiers termes de la somme pondérée de la sortie $\delta_0^{(k)}$ égale à :

$$\delta_0^{(k+1)}.W_{00}^{k+1} + \delta_1^{(k+1)}.W_{10}^{k+1} + \delta_2^{(k+1)}.W_{20}^{k+1} + \delta_0^{(k+1)}.W_{20}^{k+1}$$

Pendant ce même deuxième cycle t2, l'unité de calcul PE0 multiplie la 1ère donnée $\delta_0^{(k+1)}$ restée stockée dans son registre d'entrée $REG\_in_0$ par le poids $w_{01}^{(k+1)}$ et transmet le résultat à l'unité de calcul suivante $PE_1$ pour additionner $\delta_0^{(k+1)}.w_{01}^{(k+1)}$ à $\delta_1^{(k+1)}.w_{11}^{(k+1)}$ à t3 pour calculer la sortie $\delta_1^{(k)}$. Le même principe est répété le long de la chaine des unités de calcul tel qu'illustré dans la figure 7b.

A la fin du quatrième cycle t4, la dernière unité de calcul de la chaine $PE_4$ obtient donc un résultat partiel de $\delta_0^{(k)}$ sur les quatre premières données. Le résultat partiel entre dans la structure FIFO réalisée par les accumulateurs de toutes les unités de calcul.

La profondeur de l'étage de mémoire fonctionnant en FIFO doit être dimensionnée pour réaliser le fonctionnement suivant. A titre d'exemple, le premier résultat partiel $\delta_0^{(k)}$: $\delta_0^{(k+1)}.w_{00}^{k+1} + \delta_1^{(k+1)}.w_{10}^{k+1} + \delta_2^{(k+1)}.w_{20}^{k+1} + \delta_3^{(k+1)}.w_{30}^{k+1}$ doit être présent dans un accumulateur de l'ensemble des accumulateurs de l'unité de calcul initiale lors du cycle correspondant à la reprise du calcul $\delta_0^{(k)}$ par l'unité de calcul initiale $PE_0$.

Cela dépend alors de la séquence des opérations de calcul réalisée par le calculateur CALC pendant la phase de rétro propagation. Sans perte de généralité, nous allons décrire un fonctionnement possible de l'ensemble d'accumulateurs pour éviter de réaliser plusieurs lectures successives des données d'entrée au niveau des registres d'entrée $Reg\_in_n$.

Au cycle de calcul t4, l'unité de calcul initiale $PE_0$ réalise le calcul du premier terme de la somme pondérée de l'erreur $\delta_4^{(k)}$. Après M cycles de calcul, l'unité de calcul initiale $PE_0$ reprend le calcul de l'erreur $\delta_0^{(k)}$ après avoir calculé le résultat partiel composé des quatre premiers termes pour tous les neurones de sorties $N_i^k$. Dans ce cas, la profondeur de l'étage mémoire fonctionnant en FIFO doit être égale au nombre de neurones de la couche $C_k$. Ainsi, chaque unité de calcul comprend un ensemble d'accumulateurs constitué de S accumulateurs tel que S est égale au nombre de neurones de la couche de sortie $C_k$ divisé par le nombre d'unités de calcul $PE_n$ arrondi à l'entier supérieur.

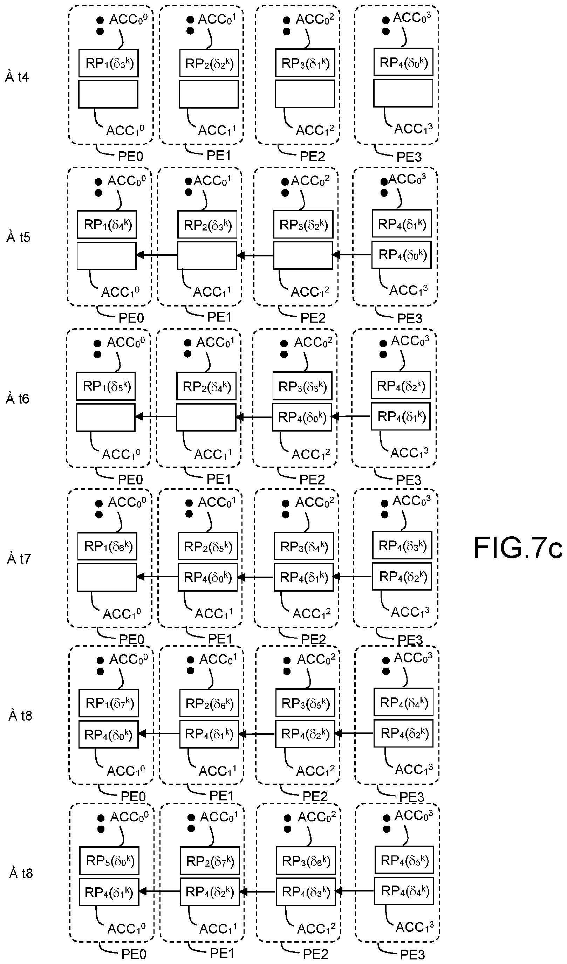

La figure 7c illustre un exemple simplifié pour mieux comprendre le fonctionnement de l'ensemble d'accumulateurs selon le principe « premier entrée premier sortie » lorsque le calculateur CALC réalise les calculs d'une rétro-propagation avec la seconde configuration CONF2.

Pour expliquer le cheminement des résultats partiels calculés à travers l'ensemble des accumulateurs selon le principe « premier entré premier sorti », la figure 7c illustre tous les ensembles des accumulateurs avec les paramètres suivants :

- Le nombre de neurones dans la couche d'entrée $C_{k+1}$ est 8.
- Le nombre de neurones dans la couche de sortie $C_k$ est 8.
- Le calculateur CALC contient quatre unités de calcul $PE_n$ avec n de 0 à 3
- Chaque unité de calcul $PE_n$ de rang n contient deux accumulateurs $ACC_0^n$ et $ACC_1^n$.

Soit $RP_j(\delta_i^{(k)})$ le résultat partiel composé des j premiers termes de la somme pondérée correspondant au résultat de sortie $\delta_i^{(k)}$.

Le déroulement des calculs pendant les quatre premiers cycles t1 à t4 a été décrit précédemment. A t4, l'accumulateur $ACC_0^3$ de la dernière unité de calcul $PE_3$ contient le résultat partiel de $\delta_0^{(k)}$ contenant les quatre premiers termes noté $RP_4(\delta_0^{(k)})$; l'accumulateur $ACC_0^2$ de l'unité de calcul $PE_2$ contient le résultat partiel de $\delta_1^{(k)}$ composé des trois premiers termes noté $RP_3(\delta_1^{(k)})$, l'accumulateur $ACC_0^1$ de l'unité de calcul $PE_1$ contient le résultat partiel de $\delta_2^{(k)}$

composé des deux premiers termes noté $RP_2(\delta_2^{(k)})$, l'accumulateur $ACC_0^0$ de l'unité de calcul $PE_0$ contient le résultat partiel de $\delta_3^{(k)}$ composé du premier terme noté $RP_1(\delta_3^{(k)})$.

Le reste des accumulateurs $\{ACC_1^0\ ACC_1^1\ ACC_1^2\ ACC_1^3\}$ utilisé pour réaliser la fonction FIFO sont vides à cette étape de calcul.

A t5, le résultat partiel $RP_4(\delta_0^{(k)})$ est transféré au deuxième accumulateur de l'unité de calcul $PE_3$ noté $ACC_1^3$. Le résultat partiel $RP_4(\delta_0^{(k)})$ entre ainsi dans la ligne d'accumulateurs $\{ACC_1^0\ ACC_1^1\ ACC_1^2\ ACC_1^3\}$ qui forment la FIFO. En même temps, l'unité de calcul initiale $PE_0$ calcule le premier produit de l'erreur $\delta_4^{(k)}$ pour stocker dans $ACC_0^0$ le résultat partiel de $\delta_4^{(k)}$ composé du premier terme noté $RP_1(\delta_4^{(k)})$; l'unité de calcul $PE_1$ calcule le second produit de l'erreur $\delta_3^{(k)}$ pour stocker dans $ACC_0^1$ le résultat partiel de $\delta_3^{(k)}$ composé des deux premiers termes noté $RP_2(\delta_3^{(k)})$. De la même manière, $ACC_0^2$ contient le résultat partiel $RP_3(\delta_2^{(k)})$ et $ACC_0^3$ contient le résultat partiel $RP_4(\delta_2^{(k)})$.

A t6, le résultat partiel $RP_4(\delta_0^{(k)})$ est transféré au deuxième accumulateur $ACC_1^2$ de l'unité de calcul précédente. Le résultat partiel $RP_4(\delta_1^{(k)})$ est transféré vers l'accumulateur $ACC_1^3$ et entre ainsi dans le groupe d'accumulateurs qui forme la FIFO. Les calculs à travers la chaine d'unité de calcul se poursuivent de la même manière décrite précédemment.

Ainsi à chaque cycle de calcul, chaque résultat partiel calculé par la dernière unité de calcul entre dans la chaine d'accumulateurs $\{ACC_1^0\ ACC_1^1\ ACC_1^2\ ACC_1^3\}$ qui forment la FIFO, et l'unité de calcul initiale entame les calculs du premier terme d'un nouveau résultat de sortie $\delta_i^{(k)}$.

Le résultat partiel $RP_4(\delta_0^{(k)})$ parcourt la chaine FIFO, étant transféré à l'un des accumulateurs de l'unité de calcul précédente à chaque cycle de calcul.

A t8, le résultat partiel $RP_4(\delta_0^{(k)})$ est stocké dans le dernier accumulateur de la chaine FIFO correspondant à $ACC_1^0$, tandis que l'unité de calcul initiale $PE_0$ calcule le premier terme du résultat partiel $RP_1(\delta_7^{(k)})$ stocké dans l'accumulateur $ACC_0^0$ et correspondant au dernier neurone de la couche calculée.

A t9, l'unité de calcul initiale $PE_0$ reprend les calculs de l'erreur $\delta_0^{(k)}$. L'unité de calcul $PE_0$ additionne $RP_4(\delta_0^{(k)})$ stocké préalablement dans l'accumulateur $ACC_1^0$ au résultat de multiplication à la sortie de MULT et stocke le résultat partiel obtenu $RP_5(\delta_0^{(k)})$ dans $ACC_0^0$. Un deuxième cycle d'opérations de multiplications et de sommation à travers la chaine d'unité de calcul $PE_n$ est démarré.

Le même principe s'applique sur les autres résultats partiels des autres erreurs $\delta_i^{(k)}$ ce qui crée un fonctionnement où les résultats partiels défilent les uns à la suite des autres dans un ordre défini à travers l'étage de mémoire FIFO à partir de la dernière unité de calcul $PE_3$ jusqu'à l'unité de calcul initiale $PE_0$.

Ce mode de fonctionnement peut être généralisé avec une chaine d'accumulateurs FIFO comprenant plusieurs lignes d'accumulateurs dans le cas où le ratio entre le nombre de neurones dans la couche calculée et le nombre d'unités de calcul est supérieur à 2.

Ainsi, lorsque la seconde configuration CONF2 est choisie, chaque unité de calcul $PE_n$ comprend un ensemble d'accumulateurs ACC tel que au moins un accumulateur est destiné à stocker les résultats partiels provenant de la même unité de calcul $PE_n$, et le reste des accumulateurs sont destinés à réaliser la chaine FIFO avec les accumulateurs adjacents appartenant à la même unité de calcul ou à une unité de calcul adjacente.

Les accumulateurs utilisés pour réaliser la chaine FIFO servent à transmettre un résultat partiel calculé par la dernière unité de calcul $PE_3$ vers la première unité de calcul $PE_0$ afin de poursuivre le calcul de la somme pondérée lorsque le nombre de neurones est supérieur au nombre d'unités de calcul.

La chaine FIFO composée d'une pluralité d'accumulateurs peut être implémentée en connectant les accumulateurs avec un bus à 3 états qui relient les sorties des ensembles d'accumulateurs associés à différentes unités de calcul.

Alternativement la chaine FIFO peut aussi être implémentée en transformant les registres accumulateurs en registres à décalage.

Pour conclure, le calculateur CALC selon l'invention permet de réaliser le calcul d'une couche de neurones entièrement connectée lors d'une phase de propagation lorsque la première configuration CONF1 est choisie. Le calculateur réalise en plus le calcul d'une couche de neurones entièrement connectée lors d'une phase de rétro-propagation lorsque la seconde configuration CONF2 est choisie. Ce mode de fonctionnement est compatible avec la distribution des coefficients synaptiques suivante : le sous ensemble de coefficients synaptiques stockés dans la mémoire de poids $MEM\_POIDS_n$ de rang n correspond aux coefficients synaptiques $w_{i,j}^k$ de toutes les lignes $[L_i]$ de rangs i de la matrice de poids $[MP]^k$ tel que i modulo (N+1) est égal à n.

Alternativement, par symétrie, le calculateur CALC peut en outre réaliser le calcul d'une couche de neurones entièrement connectée lors d'une phase de propagation lorsque la seconde configuration CONF2 est choisie. Le calculateur réalise en plus le calcul d'une couche de neurones entièrement connectée lors d'une phase de rétro-propagation lorsque la première configuration CONF1 est choisie. Ce mode de fonctionnement est compatible avec la distribution des coefficients synaptiques suivante : le sous ensemble de coefficients synaptiques stockés dans la mémoire de poids $MEM\_POIDS_n$ de rang n correspond aux coefficients synaptiques $w_{i,j}^k$ de toutes les colonnes $[C_i]$ de rangs i de la matrice de poids $[MP]^k$ tel que i modulo (N+1) est égal à n.

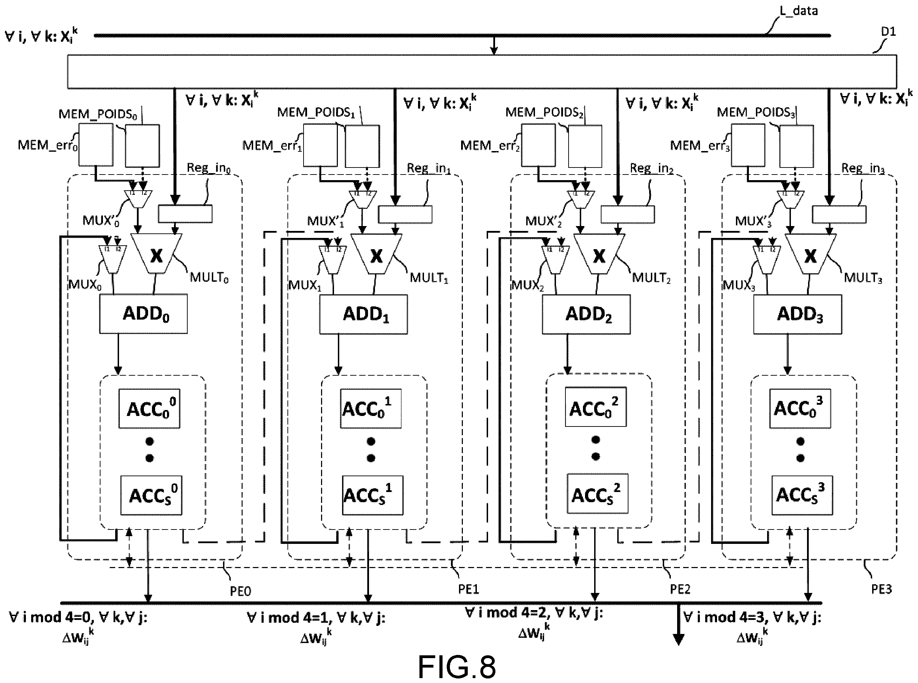

Pour réaliser une phase d'apprentissage d'un réseau de neurones, les coefficients synaptiques sont mis à jour en se basant sur les données propagées pendant une phase de propagation et les erreurs calculées pour chaque couche de neurones suite à une rétro propagation d'erreurs pour un ensemble d'échantillons d'images utilisés pour l'apprentissage. La figure 8 illustre un diagramme fonctionnel du calculateur accélérateur CALC configuré pour effectuer la mise à jour des poids pendant une phase d'apprentissage.

Les multiplexeurs MUX$_n$ sont configurés selon la première configuration CONF1, ce qui change est la sélection de l'entrée des circuits multiplieurs MULT$_n$. En effet, la phase de mise à jour des poids comprend le calcul suivant :

$$\Delta W_{ij}^{(k)} = 1/N_{batch} * \sum_{Nbatch} X_i^{(k)} . \delta_j^{(k)}$$

avec N$_{batch}$ le nombre d'échantillons d'images utilisés pour l'apprentissage et $\Delta W_{ij}^{(k)}$ les incréments des poids utilisés pour la mise à jour.

Pendant le calcul des erreurs $\delta_j^{(k)}$ d'une couche de neurone C$_k$, les résultats de sortie $\delta_j^{(k)}$ sont stockés au fur et mesure dans les mémoires d'erreurs MEM_err$_n$ appartenant aux différentes unités de calculs PE$_n$. Les erreurs sont distribuées sur les différentes mémoires de la façon suivante : l'erreur $\delta_j^{(k)}$ de rang j est stockée dans la mémoire d'erreurs MEM_err$_n$ de rang n telque j modulo (N+1) est égal à n.

Les multiplexeurs MUX'$_n$ sont alors configurés par les moyens de contrôle pour sélectionner les erreurs $\delta_j^{(k)}$ préalablement enregistrées dans les mémoires d'erreurs MEM_err$_n$ au cours de la phase de rétro-propagation, au fur et à mesure de l'obtention des résultats d'erreurs. Les erreurs stockées $\delta_j^{(k)}$ sont multipliées par les données X$_i^{(k)}$ distribuées selon un déroulement des opérations de calcul choisi par le concepteur.

Ainsi, l'architecture de calcul proposée par l'invention permet de réaliser, l'ensemble des phases de calcul exécutées par un réseau de neurones avec une même architecture partiellement reconfigurable.

Dans la section suivante nous allons exposer l'application du calculateur accélérateur CALC pour calculer une couche convolutionelle. Le principe de fonctionnement selon les deux configurations CONF1 et CONF2 du calculateur reste inchangé. Cependant la distribution des poids sur les différentes mémoires de poids MEM_POIDS$_n$ doit être adaptée pour réaliser les calculs effectués pour une couche convolutionelle.

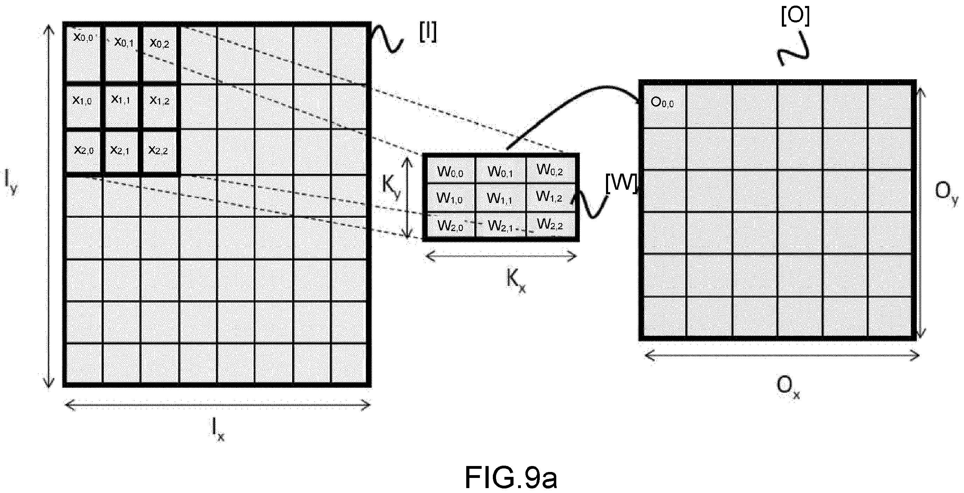

Les figures 9a-9d illustrent le fonctionnement général d'une couche de convolution.

La figure 9a représente une matrice d'entrée [I] de taille ($I_x$,$I_y$) connectée à une matrice de sortie [O] de taille ($O_x$,$O_y$) via une couche de convolution réalisant une opération de convolution à l'aide d'un filtre [W] de taille ($K_x$,$K_y$).

Une valeur $O_{i,j}$ de la matrice de sortie [O] (correspondant à la valeur de sortie d'un neurone de sortie) est obtenue en appliquant le filtre [W] sur la sous-matrice correspondant de la matrice d'entrée [I].

Sur la figure 9a, on a représenté la première valeur $O_{0,0}$ de la matrice de sortie [O] obtenue en appliquant le filtre [W] à la première sous-matrice d'entrée de dimensions égales à celle du filtre [W].

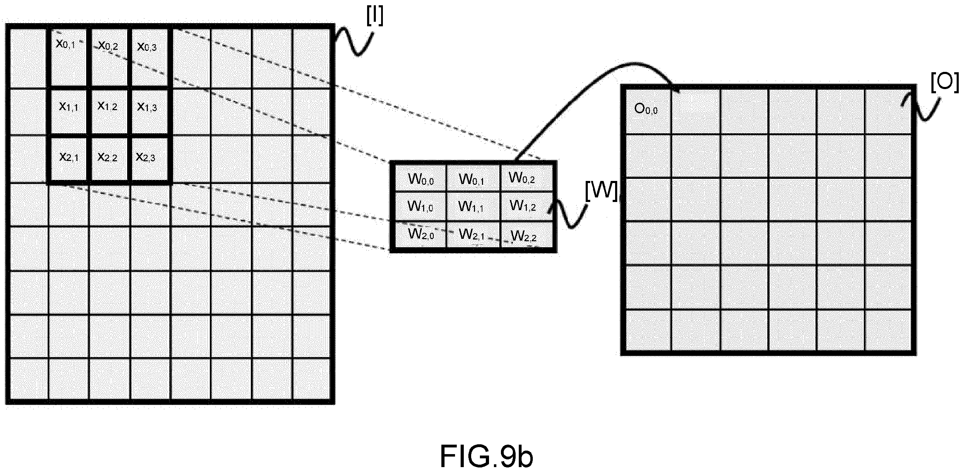

Sur la figure 9b, on a représenté la deuxième valeur $O_{0,1}$ de la matrice de sortie [O] obtenue en appliquant le filtre [W] à la deuxième sous-matrice d'entrée.

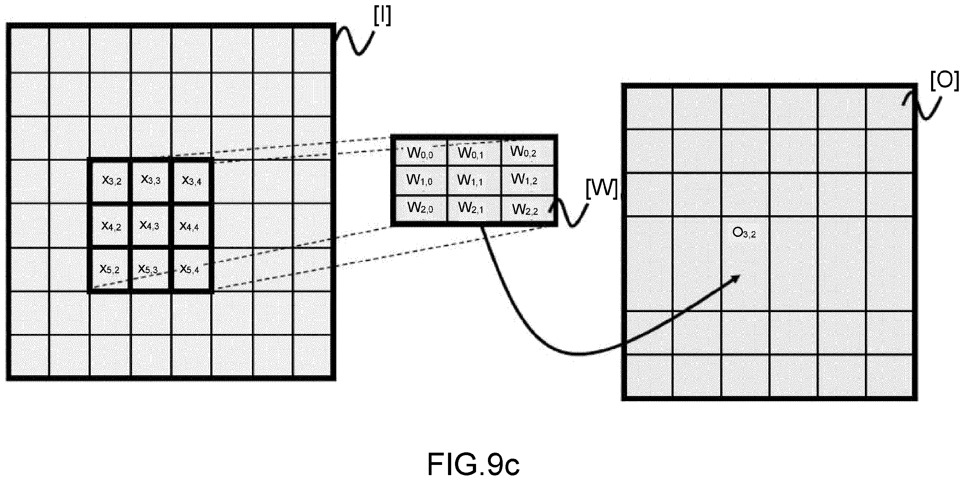

La figure 9c représente un cas général de calcul d'une valeur $O_{3,2}$ quelconque de la matrice de sortie.

De façon générale, la matrice de sortie [O] est connectée à la matrice d'entrée [I] par une opération de convolution, via un noyau de convolution ou filtre noté [W]. Chaque neurone de la matrice de sortie [O] est connecté à une partie de la matrice d'entrée [I], cette partie étant appelée « sous-matrice d'entrée » ou encore « champ récepteur du neurone » et étant de mêmes dimensions que le filtre [W]. Le filtre [W] est commun pour l'ensemble des neurones d'une matrice de sortie [O].

Les valeurs des neurones de sortie $O_{i,j}$ rangées dans la matrice de sortie [O] sont données par la relation suivante :

$$O_{i,j} = g\left( \sum_{t=0}^{(K_x-1)} \sum_{l=0}^{(K_y-1)} x_{i.s_i+t,j.s_j+l} . w_{t,l} \right)$$

Dans la formule ci-dessus, g() désigne la fonction d'activation du neurone, tandis que $s_i$ et $s_j$ désignent les paramètres de décalage (« stride » en anglais) vertical et horizontal respectivement. Un tel décalage « stride » correspond au décalage entre chaque application du noyau de convolution sur la matrice d'entrée. Par exemple, si le décalage est supérieur ou égal à la taille du noyau, alors il n'y a pas de chevauchement entre chaque application du noyau. Nous rappelons que cette formule est valable dans le cas où la matrice d'entrée a été traitée pour rajouter des lignes et de colonnes supplémentaires (Padding en Anglais). La matrice filtre [W] est composée par les coefficients synaptiques $w_{t,l}$ de rangs t=0 à $K_x$-1 et l=O à $K_y$-1.

Plus généralement, chaque couche de neurone convolutionnelle notée C$_k$ peut recevoir une pluralité de matrices d'entrée sur plusieurs canaux d'entrée de rang p=0 à P avec P un entier positif et/ou calculer plusieurs matrices de sortie sur une pluralité de canaux de sortie de rang q=0 à Q avec Q un entier positif. On note $[W]_{p,q}^{,k+1}$ le filtre correspondant au noyau de convolution qui connecte la matrice de sortie $[O]_q$ de la couche de neurone $C_{k+1}$ à une matrice d'entrée $[I]_p$ dans la couche de neurone $C_k$. Différents filtres peuvent être associés à différentes matrices d'entrée, pour la même matrice de sortie.

Pour simplifier, la fonction d'activation g() n'est pas représentée sur les figures 9a-9d.

Les figures 9a-9c illustrent un cas où une seule matrice de sortie $[O]$ est connectée à une seule matrice d'entrée $[I]$.

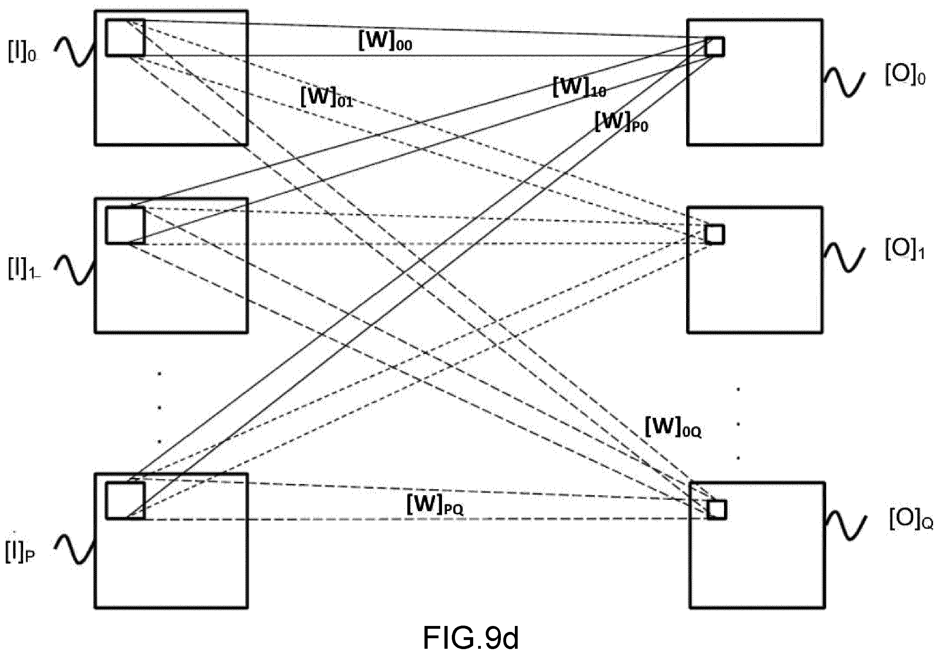

La figure 9d illustre un autre cas où plusieurs matrices de sortie $[O]_q$ sont connectées chacune à plusieurs matrices d'entrée $[I]_p$. Dans ce cas, chaque matrice de sortie $[O]_q$ de la couche $C_k$ est connectée à chaque matrice d'entrée $I_p$ via un noyau de convolution $[W]_{p,q}{}^k$ qui peut être différent selon la matrice de sortie.

Par ailleurs, lorsqu'une matrice de sortie est connectée à plusieurs matrices d'entrée, la couche de convolution réalise, en plus de chaque opération de convolution décrite ci-dessus, une somme des valeurs de sortie des neurones obtenues pour chaque matrice d'entrée. Autrement dit, la valeur de sortie d'un neurone de sortie (ou aussi appelé canaux de sortie) est dans ce cas égale à la somme des valeurs de sorties obtenues pour chaque opération de convolution appliquée à chaque matrice d'entrée (ou aussi appelé canaux d'entrée).

Les valeurs des neurones de sortie $O_{i,j}$ de la matrice de sortie $[O]_q$ sont dans ce cas données par la relation suivante :

$$O_{i,j,q} = g\left(\sum_{p=0}^{P}\sum_{t=0}^{(K_x-1)}\sum_{l=0}^{(K_y-1)} x_{p,i.s_i+t,j.s_j+l}\cdot W_{p,q,t,l}\right)$$

Avec p=0 à P le rang d'une matrice d'entrée $[I]_p$ connectée à la matrice de sortie $[O]_q$ de la couche $C_k$ de rang q=0 à Q via le filtre $[W]_{p,q}{}^k$ composée des coefficients synaptiques $w_{p,q,t,l}$ de rangs t=0 à $K_x$-1 et l=0 à $K_y$-1.

Ainsi, pour réaliser le calcul du résultat de sortie d'une matrice de sortie $[O]_q$ de rang q de la couche $C_k$ il est nécessaire de disposer de l'ensemble des coefficients synaptiques des matrices de poids $[W]_{p,q}$ connectant toutes les matrices d'entrée $[I]_p$ à la matrice de sortie $[O]_q$ de rang q.

Ainsi, le calculateur CALC peut calculer une couche convolutionnelle avec les mêmes mécanismes et configurations décrits pour l'exemple de la couche entièrement connectée, si les coefficients synaptiques sont judicieusement distribués sur les mémoires de poids MEM_POIDS$_n$.

Lorsque le sous ensemble de coefficients synaptiques stockés dans la mémoire de poids MEM_POIDS$_n$ de rang n correspond aux coefficients synaptiques appartenant à toutes les matrices de poids $W_{p,q}$ associées à la matrice de sortie de rang q tel que q modulo (N+1) est égal à n, l'unité de calcul PE$_n$ réalise intégralement les opérations de multiplications et d'addition pour calculer la matrice de sortie $O_q$ de rang q de la couche $C_k$ pendant une propagation des donnée ou une inférence. Le calculateur est configuré dans ce cas selon la première configuration CONF1 décrite précédemment.

Lorsque le calculateur est configuré selon la deuxième configuration, la distribution des coefficients synaptiques selon le rang du canal de sortie associé, permet au calculateur CALC d'effectuer les calculs d'une phase de rétro-propagation.

Réciproquement, lorsque le sous ensemble de coefficients synaptiques stockés dans la mémoire de poids MEM_POIDS$_n$ de rang n correspond aux coefficients synaptiques appartenant à toutes les matrices de poids $W_{p,q,k}$ associées à la matrice d'entrée de rang p (ou canal d'entrée) tel que p modulo (N+1) est égal à n, le calculateur réalise une propagation avec la seconde configuration CONF2 et une rétro propagation avec la première configuration CONF1.

Le principe de l'exécution des calculs reste le même que celui décrit pour une couche entièrement connectée.

Le calculateur CALC selon les modes de réalisation de l'invention peut être utilisé dans de nombreux domaines d'application, notamment dans des applications où une classification de données est utilisée. Les domaines d'application du calculateur CALC selon les modes de réalisation de l'invention comprennent par exemple des applications de surveillance vidéo avec une reconnaissance en temps réel de personne, des applications interactives de classification mises en œuvre dans des téléphones intelligents (« smartphones ») pour des applications interactives de classification, des applications de fusion de données dans des systèmes de surveillance de domicile etc.

Le calculateur CALC selon l'invention peut être implémenté à l'aide de composants matériels et/ou logiciels. Les éléments logiciels peuvent être disponibles en tant que produit par un programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple. Le calculateur CALC comprend également une ou plusieurs mémoires qui peuvent être des registres, registres à décalage, mémoire RAM, mémoire ROM ou tout autre type de mémoire adapté à la mise en œuvre de l'invention.

**Revendications**

1. Calculateur (CALC) pour calculer une couche ($C_k$, $C_{k+1}$) d'un réseau de neurones artificiels, le réseau de neurones étant composé d'une succession de couches ($C_k$, $C_{k+1}$) étant chacune constituée d'un ensemble de neurones, chaque couche étant associée à un ensemble de coefficients synaptiques ($w_{ij}^{k+1}$,) formant au moins une matrice de poids ($[MP]^{k+1}$, $W_{P,Q}$),
   le calculateur (CALC) étant configurable selon deux configurations distinctes (CONF1, CONF2) et comprenant :

   - une ligne de transmission (L_data) pour distribuer des données d'entrée ($X_j^k$, $\delta_i^{k+1}$ ,$x_{i,j}$),
   - un ensemble d'unités de calcul ($PE_0$, $PE_1$, $PE_2$, $PE_3$) de rangs n=0 à N avec N un entier supérieur ou égal à 1, pour calculer une somme de données d'entrée pondérée par des coefficients synaptiques,
   - un ensemble de mémoires de poids ($MEM\_POIDS_0$, $MEM\_POIDS_1$, $MEM\_POIDS_2$, $MEM\_POIDS_3$) chacune associée à une unité de calcul ($PE_0$, $PE_1$, $PE_2$, $PE_3$), chaque mémoire de poids contenant un sous ensemble de coefficients synaptiques nécessaire et suffisant à l'unité de calcul ($PE_0$, $PE_1$, $PE_2$, $PE_3$) associée pour réaliser les calculs nécessaires pour l'une quelconque des deux configurations (CONF1, CONF2),
   - des moyens de contrôle pour configurer les unités de calcul ($PE_0$, $PE_1$, $PE_2$, $PE_3$) du calculateur (CALC) selon l'une quelconque des deux configurations (CONF1, CONF2),
   - dans la première configuration (CONF1) les unités de calcul étant configurées de manière à ce que le calcul d'une somme pondérée soit réalisé intégralement par une même unité de calcul,
   - dans la seconde configuration (CONF2) les unités de calcul étant configurées de manière à ce que le calcul d'une somme pondérée soit réalisé par une chaine de plusieurs unités de calcul agencées en série.

2. Calculateur (CALC) selon la revendication 1 dans lequel la première configuration et la seconde configuration correspondent respectivement à un fonctionnement du calculateur selon l'une quelconque des phases parmi une phase de propagation de données ou une phase de rétro-propagation d'erreurs.

3. Calculateur (CALC) selon la revendication 2 dans lequel les données d'entrée ($X_j^k$, $\delta_i^{k+1}$, $x_{i,j}$), sont des données ($X_j^k$, $x_{i,j}$) propagées lors de la phase de propagation de données ou des erreurs ($\delta_i^{k+1}$) rétro-propagées lors de la phase de rétro-propagation d'erreurs.

4. Calculateur (CALC) selon l'une quelconque des revendications précédentes dans lequel le nombre d'unités de calcul ($PE_0$, $PE_1$, $PE_2$, $PE_3$) est inférieur au nombre de neurones dans une couche ($C_k$, $C_{k+1}$).

5. Calculateur (CALC) selon l'une quelconque des revendications précédentes dans lequel chaque unité de calcul comprend :

   i. un registre d'entrée ($Reg\_in_0$, $Reg\_in_1$, $Reg\_in_2$, $Reg\_in_3$) pour stocker une donnée d'entrée ($X_j^k$, $\delta_i^{k+1}$ ,$x_{i,j}$),
   ii. un circuit multiplieur (MULT) pour calculer le produit d'une donnée d'entrée ($X_i^k$, $\delta_i^{k+1}$, $x_{i,j}$) et d'un coefficient synaptique ($w_{i,j}^k$);
   iii. un circuit additionneur ($ADD_0$, $ADD_1$, $ADD_2$, $ADD_3$) ayant une première entrée connectée à la sortie du circuit multiplieur ($MULT_0$, $MULT_1$, $MULT_2$, $MULT_3$) et étant configuré pour réaliser des opérations de sommation de résultats de calcul partiels d'une somme pondérée ;
   iv. au moins un accumulateur ($ACC_0^0$,$ACC_S^0$ $ACC_0^1$,$ACC_S^1$ $ACC_0^2$,$ACC_S^2$ $ACC_0^3$,$ACC_s^3$) pour stocker des résultats de calcul partiels ou finaux de la somme pondérée.

6. Calculateur (CALC) selon la revendication 5 comprenant :

   un organe de distribution de données (D1) ayant N+1 sorties, chaque sortie étant connectée au registre ($Reg\_in_0$, $Reg\_in_1$, $Reg\_in_2$, $Reg\_in_3$) d'une unité de calcul de rang n ($PE_0$, $PE_1$, $PE_2$, $PE_3$) ;
   l'organe de distribution (D1) étant commandé par les moyens de contrôle pour distribuer simultanément une donnée d'entrée ($X_i^k$, $\delta_i^{k+1}$, $x_{i,j}$) à toutes les unités de calcul ($PE_0$, $PE_1$, $PE_2$, $PE_3$) lorsque la première configuration (CONF1) est activée.

7. Calculateur (CALC) selon l'une quelconque des revendications 5 ou 6 comprenant en outre un étage mémoire fonctionnant selon un principe « premier entré premier sorti » pour propager un résultat partiel de la dernière unité de calcul de rang n=N (PE$_3$) vers la première unité de calcul (PE$_0$) de rang n=0, la sortie de l'étage mémoire étant connectée à la première unité de calcul (PE$_0$), et l'étage mémoire étant activé par les moyens de contrôle lorsque la seconde configuration (CONF2) est activée.

8.  Calculateur (CALC) selon l'une quelconque des revendications 5 ou 6 dans lequel chaque unité de calcul (PE$_0$, PE$_1$, PE$_2$, PE$_3$) comprend au moins un nombre d'accumulateurs (ACC$_0^0$,ACC$_S^0$) égal au nombre de neurones par couche divisé par le nombre d'unités de calcul (PE$_0$, PE$_1$, PE$_2$, PE$_3$) arrondi à l'entier supérieur.

9.  Calculateur (CALC) selon la revendication 8 dans lequel :

    chaque ensemble d'accumulateurs (ACC$_0^0$, ACC$_S^0$, ACC$_0^1$, ACC$_S^1$, ACC$_0^2$, ACC$_S^2$ ACC$_0^3$, ACC$_s^3$) comporte une entrée (E1°, E1$^1$, E1$^2$, E1$^3$) en écriture sélectionnable parmi les entrées de chaque accumulateur de l'ensemble et une sortie (S1$^0$, S1$^1$, S1$^2$, S1$^3$) en lecture sélectionnable parmi les sorties de chaque accumulateur de l'ensemble ;
    chaque unité de calcul (PE$_1$, PE$_2$, PE$_3$) de rang n=1 à N comprenant :

    un multiplexeur (MUX$_1$) ayant une première entrée (I1) connectée à la sortie (S1$^1$,S1$^2$,S1$^3$) de l'ensemble des accumulateurs (ACC$_0^1$,ACC$_S^1$ ACC$_0^2$, ACC$_S^2$ ACC$_0^3$,ACC$_s^3$) de l'unité de calcul de rang n, une seconde entrée (I2) connectée à la sortie (S1$^0$, S1$^1$,S1$^2$) de l'ensemble des accumulateurs (ACC$_0^0$,ACC$_S^0$ ACC$_0^1$,ACC$_S^1$ ACC$_0^2$, ACC$_S^2$) d'une unité de calcul de rang n-1 et une sortie connectée à une seconde entrée du circuit additionneur (ADD$_1$, ADD$_2$, ADD$_3$) de l'unité de calcul de rang n ;
    l'unité de calcul de rang n=0 (PE$_0$) comprenant :

    un multiplexeur (MUX$_0$) ayant une première entrée (I1) connectée à la sortie de l'ensemble des accumulateurs (ACC$_0^0$,ACC$_S^0$) de l'unité de calcul de rang n=0 , une seconde entrée (I2) connectée à la sortie (S1$^0$) de l'ensemble des accumulateurs (ACC$_0^3$,ACC$_s^3$) de l'unité de calcul de rang n=0 et une sortie connectée à une seconde entrée du circuit additionneur (ADD$_0$) de l'unité de calcul de rang n=0;
    les moyens de contrôles étant configurés pour sélectionner la première entrée (I1) de chaque multiplexeur (MUX$_0$, MUX$_1$, MUX$_2$, MUX$_3$) lorsque la première configuration (CONF1) est choisie et pour sélectionner la seconde entrée (I2) de chaque multiplexeur (MUX$_0$, MUX$_1$, MUX$_2$, MUX$_3$) lorsque la seconde configuration (CONF2) est activée.

10. Calculateur (CALC) l'une quelconque des revendications 8 ou 9 dans lequel tous les ensembles d'accumulateurs (ACC$_0^0$,ACC$_S^0$ ACC$_0^1$,ACC$_S^1$ ACC$_0^2$,ACC$_S^2$ ACC$_0^3$,ACC$_s^3$)sont interconnectés pour former un étage mémoire pour propager un résultat partiel de la dernière unité de calcul de rang n=N (PE$_3$) vers la première unité de calcul (PE$_0$) de rang n=0, l'étage mémoire fonctionnant selon un principe « premier entré premier sorti » lorsque la seconde configuration (CONF2) est activée.

11. Calculateur (CALC) selon l'une quelconque des revendications précédentes comprenant un ensemble de mémoires d'erreurs (MEM_err$_0$, MEM_err$_1$, MEM_err$_2$, MEM_err$_3$) chacune étant associée à une unité de calcul (PE$_0$, PE$_1$, PE$_2$, PE$_3$) pour stocker un sous ensemble d'erreurs calculées ($\delta_j^k$).

12. Calculateur (CALC) selon la revendication 11 dans lequel, pour chaque unité de calcul (PE$_0$, PE$_1$, PE$_2$, PE$_3$), le multiplieur (MULT) est connecté à la mémoire d'erreurs associée à la même unité de calcul (MEM_err$_0$, MEM_err$_1$, MEM_err$_2$, MEM_err$_3$) pour calculer le produit d'une donnée d'entrée ($X_i^k$, $x_{i,j}$) et d'un signal d'erreur stocké ($\delta_i^{k+1}$) pendant une phase de mise à jour des poids.

13. Calculateur (CALC) selon l'une quelconque des revendications précédentes comprenant un circuit de lecture (LECT) connecté à chaque mémoire de poids (MEM_POIDS$_0$, MEM_POIDS$_1$, MEM_POIDS$_2$, MEM_POIDS$_3$) pour commander la lecture des coefficients synaptiques ($w_{i,j}^k$).

14. Calculateur (CALC) selon l'une quelconque des revendications précédentes dans lequel une couche calculée ($C_{k+1}$) est entièrement connectée à la couche précédente ($C_k$), et les coefficients synaptiques ($w_{i,j}^k$) associés forment une matrice de poids ([MP]$^k$) de taille MxM' avec M et M' les nombres respectifs de neurones des deux couches.

15. Calculateur (CALC) selon la revendication 14 dans lequel l'organe de distribution (D1) est commandé par les moyens de contrôle pour distribuer une donnée d'entrée ($X_i^k$, $\delta_i^{k+1}$) associée à un neurone de rang i à une unité de calcul

($PE_0$, $PE_1$, $PE_2$, $PE_3$) de rang n tel que i modulo N+1 égal à n lorsque la seconde configuration (CONF2) est activée.

16. Calculateur (CALC) selon la revendication 14 , dans lequel lorsque la première configuration (CONF1) est activée, l'intégralité des opérations de multiplication et d'addition pour calculer la somme pondérée ($X_i^{k+1}$, $\delta_j^k$) associée au neurone de rang i, est réalisée exclusivement par l'unité de calcul ($PE_0$, $PE_1$, $PE_2$, $PE_3$) de rang n tel que i modulo N+1 égal à n.

17. Calculateur (CALC) selon l'une quelconque des revendications 14 ou 15 , dans lequel, lorsque la seconde configuration (CONF2) est activée, chaque unité de calcul ($PE_1$, $PE_2$, $PE_3$) de rang n=1 à N réalise l'opération de multiplication de chaque donnée d'entrée ($X_j^k$, $\delta_i^{k+1}$) associée au neurone de rang j par un coefficient synaptique ($w_{i,j}^k$) tel que j modulo N+1 égal à n , suivie d'une addition avec la sortie de l'unité de calcul ($PE_0$, $PE_1$, $PE_2$, $PE_3$) de rang n-1 pour obtenir un résultat partiel ou total d'une somme pondérée ($X_i^{k+1}$ $\delta_j^k$).

18. Calculateur (CALC) selon l'une quelconque des revendications 14 à 17 dans lequel le sous ensemble de coefficients synaptiques stockés dans la mémoire de poids ($MEM\_POIDS_0$, $MEM\_POIDS_1$, $MEM\_POIDS_2$, $MEM\_POIDS_3$) de rang n correspond aux coefficients synaptiques ($w_{i,j}^k$) de toutes les lignes de rangs i de la matrice de poids ($[MP]^k$) tel que i modulo N+1 est égal à n lorsque la première configuration (CONF1) est une configuration de calcul pour la phase de propagation de données et la seconde configuration (CONF2) est une configuration de calcul pour la phase de rétro-propagation d'erreurs.

19. Calculateur (CALC) selon l'une quelconque des revendications 14 à 17 dans lequel le sous ensemble de coefficients synaptiques stockés dans la mémoire de poids ($MEM\_POIDS_0$, $MEM\_POIDS_1$, $MEM\_POIDS_2$, $MEM\_POIDS_3$) de rang n correspond aux coefficients synaptiques ($w_{i,j}^k$) de toutes les colonnes de rangs j de la matrice de poids ($[MP]^k$) tel que j modulo N+1 est égal à n lorsque la première configuration (CONF1) est une configuration de calcul pour la phase de rétro-propagation d'erreurs et la seconde configuration (CONF2) est une configuration de calcul pour la phase de propagation de données.

20. Calculateur (CALC) selon l'une quelconque des revendications 1 à 13 dans lequel le réseau de neurones comprend au moins une couche de neurones convolutionnelle, la couche ayant une pluralité de matrices de sortie de rang q=0 à Q avec Q un entier positif, chaque matrice de sortie étant obtenue à partir d'au moins une matrice d'entrée de rang p=0 à P avec P un entier positif, pour chaque couple de matrice d'entrée de rang p et matrice de sortie de rang q, les coefficients synaptiques ($w_{i,j}$) associés formant une matrice de poids ($W_{P,Q}$).

21. Calculateur (CALC) selon la revendication 20 dans lequel, lorsque la première configuration (CONF1) est activée, l'intégralité des opérations de multiplication et d'addition pour calculer une matrice de sortie de rang q, est réalisée exclusivement par l'unité de calcul ($PE_0$, $PE_1$, $PE_2$, $PE_3$) de rang n tel que q modulo N+1 égal à n.

22. Calculateur (CALC) selon la revendication 20 dans lequel, lorsque la seconde configuration (CONF2) est activée, chaque unité de calcul ($PE_1$, $PE_2$, $PE_3$) de rang n=1 à N réalise les opérations de calcul des résultats partiels obtenus à partir de chaque matrice d'entrée de rang p tel que p modulo N+1 égal à n , suivies d'une addition avec le résultat partiel de l'unité de calcul ($PE_0$, $PE_1$, $PE_2$, $PE_3$) de rang n-1.

23. Calculateur (CALC) selon l'une quelconque des revendications 20 à 22 dans lequel le sous ensemble de coefficients synaptiques stockés dans la mémoire de poids ($MEM\_POIDS_0$, $MEM\_POIDS_1$, $MEM\_POIDS_2$, $MEM\_POIDS_3$) de rang n correspond aux coefficients synaptiques ($w_{i,j,p,q}^k$) appartenant à toutes les matrices de poids ($W_{P,Q}$) associées à la matrice de sortie de rang q tel que q modulo N+1 est égal à n lorsque la première configuration (CONF1) est une configuration de calcul pour la phase de propagation de données et la seconde configuration (CONF2) est une configuration de calcul pour la phase de rétro-propagation d'erreurs.

24. Calculateur (CALC) selon l'une quelconque des revendications 20 à 22 dans lequel le sous ensemble de coefficients synaptiques stockés dans la mémoire de poids ($MEM\_POIDS_0$, $MEM\_POIDS_1$, $MEM\_POIDS_2$, $MEM\_POIDS_3$) de rang n correspond aux coefficients synaptiques ($w_{i,j,}$) appartenant à toutes les matrices de poids ($W_{P,Q}$) associées à la matrice d'entrée de rang p tel que p modulo N+1 est égal à n lorsque la première configuration (CONF1) est une configuration de calcul pour la phase de rétro-propagation d'erreurs et la seconde configuration (CONF2) est une configuration de calcul pour la phase de propagation des données.

FIG.1

FIG.2

FIG.3

FIG.4

EP 3 955 167 A1

$[C_j]^{k+1}$

$[MP]^{k+1} =$

| $w_{0,0}^{k+1}$ | | | | $w_{0,j}^{k+1}$ | | | | | | | $w_{0,M}^{k+1}$ | $\longrightarrow [L_0]^{k+1}$ stockée dans MEM_POIDS$_0$ |
| $w_{1,0}^{k+1}$ | | | | $w_{1,j}^{k+1}$ | | | | | | | $w_{1,M}^{k+1}$ | $\longrightarrow [L_1]^{k+1}$ stockée dans MEM_POIDS$_1$ |
| $w_{2,0}^{k+1}$ | | | | $w_{2,j}^{k+1}$ | | | | | | | $w_{2,M}^{k+1}$ | $\longrightarrow [L_2]^{k+1}$ stockée dans MEM_POIDS$_2$ |
| $w_{3,0}^{k+1}$ | | | | $w_{3,j}^{k+1}$ | | | | | | | $w_{3,M}^{k+1}$ | $\longrightarrow [L_3]^{k+1}$ stockée dans MEM_POIDS$_3$ |
| $w_{4,0}^{k+1}$ | | | | $w_{4,j}^{k+1}$ | | | | | | | $w_{4,M}^{k+1}$ | $\longrightarrow [L_4]^{k+1}$ stockée dans MEM_POIDS$_0$ |

$[L_i]^{k+1} \rightarrow$
$i \bmod (N+1) = n$

| $w_{i,0}^{k+1}$ | | | | $w_{i,j}^{k+1}$ | | | | | | | $w_{i,M}^{k+1}$ | $\longrightarrow [L_i]^{k+1}$ stockée dans MEM_POIDS$_n$ |

| $w_{M,0}^{k+1}$ | | | | $w_{M,j}^{k+1}$ | | | | | | | $w_{M,M}^{k+1}$ |

Couche: $k \rightarrow k+1$
Nombre neurones par Couche: M
Nombre de PE: N+1

# FIG.5

FIG.6a

FIG.6b

FIG.7a

EP 3 955 167 A1

$$\delta_0^k = S($$

$$\delta_0^{k+1} . w_{00}^{k+1} \text{ (par } \underline{PE0} \text{ à t1)}$$
$$+$$
$$\delta_1^{k+1} . w_{10}^{k+1} \text{ (par } \underline{PE1} \text{ à t2)}$$
$$+$$
$$\delta_2^{k+1} . w_{20}^{k+1} \text{ (par } \underline{PE2} \text{ à t3)}$$
$$+$$
$$\delta_3^{k+1} . w_{30}^{k+1} \text{ (par } \underline{PE3} \text{ à t4)}$$
$$...$$
$$)$$

$$\delta_1^k = S($$

$$\delta_0^{k+1} . w_{01}^{k+1} \text{ (par } \underline{PE0} \text{ à t2)}$$
$$+$$
$$\delta_1^{k+1} . w_{11}^{k+1} \text{ (par } \underline{PE1} \text{ à t3)}$$
$$+$$
$$\delta_2^{k+1} . w_{21}^{k+1} \text{ (par } \underline{PE2} \text{ à t4)}$$
$$+$$
$$\delta_3^{k+1} . w_{31}^{k+1} \text{ (par } \underline{PE3} \text{ à t5)}$$
$$...$$
$$)$$

$$\delta_2^k = S($$

$$\delta_0^{k+1} . w_{02}^{k+1} \text{ (par } \underline{PE0} \text{ à t3)}$$
$$+$$
$$\delta_1^{k+1} . w_{12}^{k+1} \text{ (par } \underline{PE1} \text{ à t4)}$$
$$+$$
$$\delta_2^{k+1} . w_{22}^{k+1} \text{ (par } \underline{PE2} \text{ à t5)}$$
$$+$$
$$\delta_3^{k+1} . w_{32}^{k+1} \text{ (par } \underline{PE3} \text{ à t6)}$$
$$...$$
$$)$$

$$\delta_3^k = S($$

$$\delta_0^{k+1} . w_{03}^{k+1} \text{ (par } \underline{PE0} \text{ à t4)}$$
$$+$$
$$\delta_1^{k+1} . w_{13}^{k+1} \text{ (par } \underline{PE1} \text{ à t5)}$$
$$+$$
$$\delta_2^{k+1} . w_{23}^{k+1} \text{ (par } \underline{PE2} \text{ à t6)}$$
$$+$$
$$\delta_3^{k+1} . w_{33}^{k+1} \text{ (par } \underline{PE3} \text{ à t7)}$$
$$...$$
$$)$$

RETRO_PROP

Couche k → $\delta_0^k$ $\delta_1^k$ $\delta_2^k$ $\delta_3^k$

$w_{00}^{k+1}$ $w_{10}^{k+1}$ $w_{20}^{k+1}$ $w_{30}^{k+1}$

Couche k+1 → $\delta_0^{k+1}$ $\delta_1^{k+1}$ $\delta_2^{k+1}$ $\delta_3^{k+1}$

FIG.7b

FIG.7c

FIG.8

FIG.9a

FIG.9b

EP 3 955 167 A1

FIG.9c

EP 3 955 167 A1

FIG.9d

Europäisches
Patentamt

European
Patent Office

Office européen
des brevets

# RAPPORT DE RECHERCHE EUROPEENNE

Numéro de la demande

EP 21 18 8511

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/104669 A1 (EXPEDERA INC [US]) 2 avril 2020 (2020-04-02) | 1-6,8, 11-24 | INV. G06N3/04 |
| A | * figures 1B-2F * <br> * alinéas [0030] - [0065] * <br> * alinéas [0079], [0080] * <br> ----- | 7,9,10 | G06N3/063 G06N3/08 |
| A | DENG CHUNHUA ET AL: "PermDNN: Efficient Compressed DNN Architecture with Permuted Diagonal Matrices", 2018 51ST ANNUAL IEEE/ACM INTERNATIONAL SYMPOSIUM ON MICROARCHITECTURE (MICRO), IEEE, 20 octobre 2018 (2018-10-20), pages 189-202, XP033473297, DOI: 10.1109/MICRO.2018.00024 * Section IV-B et IV-C. * ----- | 1-24 | |
| A | US 2018/157961 A1 (VIA ALLIANCE SEMICONDUCTOR CO LTD [CN]) 7 juin 2018 (2018-06-07) * figures 1-6B * * alinéas [0097] - [0136] * ----- | 1-24 | **DOMAINES TECHNIQUES RECHERCHES (IPC)** G06N |

Le présent rapport a été établi pour toutes les revendications

| Lieu de la recherche | Date d'achèvement de la recherche | Examinateur |
|---|---|---|
| La Haye | 17 décembre 2021 | Millet, Guillaume |

EPO FORM 1503 03.82 (P04C02)

**EP 3 955 167 A1**

## ANNEXE AU RAPPORT DE RECHERCHE EUROPEENNE
## RELATIF A LA DEMANDE DE BREVET EUROPEEN NO.

EP 21 18 8511

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-12-2021

| Document brevet cité au rapport de recherche | Date de publication | Membre(s) de la famille de brevet(s) | Date de publication |
|---|---|---|---|
| US 2020104669 A1 | 02-04-2020 | AUCUN | |
| US 2018157961 A1 | 07-06-2018 | CN 108133263 A | 08-06-2018 |
| | | EP 3330899 A1 | 06-06-2018 |
| | | JP 6357524 B2 | 11-07-2018 |
| | | JP 2018092559 A | 14-06-2018 |
| | | KR 20180062910 A | 11-06-2018 |
| | | US 2018157961 A1 | 07-06-2018 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. FUKUSHIMA.** Neocognitron: A self-organizing neural network model for a mechanism of pattern récognition unaffected by shift in position. *Biological Cybernetics,* 1980, vol. 36 (4), ISSN 0340-1200, 193-202